# EUROPEAN PATENT SPECIFICATION

(11) **EP 4 416 882 B1**
(45) Date of publication and mention of the grant of the patent: **13.05.2026**
(21) Application number: 22792970.0
(22) Date of filing: 22.09.2022
(51) Int. Cl.: H04L 1/1825, H04L 1/1829, H04L 1/1867, H04L 1/00, H04L 5/00, H04L 27/26

(54) **FEEDBACK STAGGERING OR MUTING FOR NETWORK CODING**
RÜCKKOPPLUNGSSTAFFELUNG ODER -STUMMSCHALTUNG ZUR NETZWERKCODIERUNG
ÉCHELONNEMENT OU BLOCAGE DE RÉTROACTION POUR CODAGE DE RÉSEAU

(30) Priority: 14.10.2021 US 202117450942
(43) Date of publication of application: 21.08.2024
(73) Proprietor: QUALCOMM INCORPORATED, San Diego, California 92121-1714 (US)
(72) Inventor: LIU, Guangyi, San Diego, California 92121 (US); SARKIS, Gabi, San Diego, California 92121 (US); NGUYEN, Tien Viet, San Diego, California 92121 (US); GULATI, Kapil, San Diego, California 92121 (US); WU, Shuanshuan, San Diego, California 92121 (US)
(74) Representative: Jaeger, Michael David
(86) International application number: PCT/US2022/044383
(87) International publication number: WO 2023/064078

(56) References cited:
- MOTOROLA: "Uplink ACK/NACK Repetition", 3GPP DRAFT; R1-082474, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Warsaw, Poland; 20080624, 24 June 2008 (2008-06-24), XP050110744
- PANASONIC: "Ack/Nack repetition and Implicit Resource Allocation for PUCCH", 3GPP DRAFT; R1-081796, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Kansas City, USA; 20080514, 14 May 2008 (2008-05-14), XP050110175
- QUALCOMM INCORPORATED: "PUCCH enhancements", vol. RAN WG1, no. e-Meeting; 20210816 - 20210827, 6 August 2021 (2021-08-06), XP052038307, Retrieved from the Internet <URL:https://ftp.3gpp.org/tsg_ran/WG1_RL1/TSGR1_106-e/Docs/R1-2107362.zip> [retrieved on 20210806]
- KAO JUNG-CHUN ET AL: "Efficient network coding at relay for relay-assisted network-coding ARQ protocols", 2013 ASIA-PACIFIC SIGNAL AND INFORMATION PROCESSING ASSOCIATION ANNUAL SUMMIT AND CONFERENCE, APSIPA, 29 October 2013 (2013-10-29), pages 1 - 4, XP032549779, DOI: 10.1109/APSIPA.2013.6694239
- ERICSSON: "HARQ procedure for SL groupcast", vol. RAN WG2, no. Reno, USA; 20190513 - 20190517, 2 May 2019 (2019-05-02), XP051711629, Retrieved from the Internet <URL:http://www.3gpp.org/ftp/tsg%5Fran/WG2%5FRL2/TSGR2%5F106/Docs/R2%2D1907344%2Ezip> [retrieved on 20190502]

## Description

### CROSS-REFERENCE TO RELATED APPLICATION

This application claims the benefit of U.S. Patent Application Serial No. 17/450,942, entitled "FEEDBACK STAGGERING OR MUTING FOR NETWORK CODING" and filed on October 14, 2021.

### TECHNICAL FIELD

The present disclosure relates generally to communication systems, and more particularly, to wireless communication including network coding.

### INTRODUCTION

Wireless communication systems are widely deployed to provide various telecommunication services such as telephony, video, data, messaging, and broadcasts. Typical wireless communication systems may employ multiple-access technologies capable of supporting communication with multiple users by sharing available system resources. Examples of such multiple-access technologies include code division multiple access (CDMA) systems, time division multiple access (TDMA) systems, frequency division multiple access (FDMA) systems, orthogonal frequency division multiple access (OFDMA) systems, single-carrier frequency division multiple access (SC-FDMA) systems, and time division synchronous code division multiple access (TD-SCDMA) systems.

These multiple access technologies have been adopted in various telecommunication standards to provide a common protocol that enables different wireless devices to communicate on a municipal, national, regional, and even global level. An example telecommunication standard is 5G New Radio (NR). 5G NR is part of a continuous mobile broadband evolution promulgated by Third Generation Partnership Project (3GPP) to meet new requirements associated with latency, reliability, security, scalability (e.g., with Internet of Things (IoT)), and other requirements. 5G NR includes services associated with enhanced mobile broadband (eMBB), massive machine type communications (mMTC), and ultra-reliable low latency communications (URLLC). Some aspects of 5G NR may be based on the 4G Long Term Evolution (LTE) standard. There exists a need for further improvements in 5G NR technology. These improvements may also be applicable to other multi-access technologies and the telecommunication standards that employ these technologies.

3GPP document R1-082474 "Uplink ACK/NACK Repetition" from Motorola, 3GPP TSG RAN1 Meeting #53-Bis, Warsaw, Poland, June 29 - July 4, 2008, investigates various uplink ACK/ NACK repetition methods to ensure balanced uplink coverage. Especially, a RRC message can indicate the ACK/NACK repetition with one bit, and the number of ACK/NACK repetitions is related to the allocation of CCEs for PDCCH reception. It is suggested also to reserve resources for repeated ACK/ NACK.

3GPP document R1-081796 "Ack/Nack repetition and Implicit Resource Allocation for PUCCH", from Panasonic, 3GPP TSG RAN WG1 Meeting #53, Kansas City, USA, May 5 - 9, 2008, discloses that UL ACK/NACK repetition is required to only UEs having difficult condition like cell edge. The number of ACK/NACK repetitions is linked to the aggregation level of the DL grant. The first ACK/NACK is transmitted in subframe x after receiving the PDSCH using PUCCH resource for the first repetition. The second and third ACK/NACK are transmitted in next subframes x+1 and x+2 using PUCCH resources reserved for the second and third repetitions respectively.

3GPP document R2-1907344 "HARQ procedure for SL groupcast" from Ericsson, 3GPP TSG-RAN WG2 Meeting #106, Reno, USA, May 13 - May 17, 2019, discloses that both RSRP based and distance based HARQ feedback need to be supported and can be (pre-)configured. Also, it may happen that a network (pre-)configure a UE to use both RSRP and distance and in this case, a UE is only allowed to skip HARQ feedback transmission when both criteria are not met.

### BRIEF SUMMARY

The following presents a simplified summary of one or more aspects in order to provide a basic understanding of such aspects. This summary is not an extensive overview of all contemplated aspects, and is intended to neither identify key or critical elements of all aspects nor delineate the scope of any or all aspects. Its sole purpose is to present some concepts of one or more aspects in a simplified form as a prelude to the more detailed description that is presented later.

Aspects of the present invention are set out in the appended claims. In an aspect of the disclosure, a method, a computer-readable medium, and an apparatus are provided for wireless communication at an encoding device. The apparatus transmits an indication for a plurality of user equipments (UEs) to provide feedback for a network coding packet across multiple time periods. The apparatus transmits the network coding packet and receives the feedback from the plurality of UEs across the multiple time periods.

In an aspect of the disclosure, a method, a computer-readable medium, and an apparatus are provided for wireless communication at a UE. The apparatus receives an indication to provide feedback for a network coding packet that is staggered in a different time period than a baseline time period. The apparatus receives the network coding packet and transmits the feedback in one time period among multiple time periods associated with the network coding packet.

To the accomplishment of the foregoing and related ends, the one or more aspects comprise the features hereinafter fully described and particularly pointed out in the claims. The following description and the annexed drawings set forth in detail certain illustrative features of the one or more aspects.

### BRIEF DESCRIPTION OF THE DRAWINGS

FIG. 1 is a diagram illustrating an example of a wireless communications system and an access network, in accordance with various aspects of the present disclosure.
FIG. 2A is a diagram illustrating an example of a first frame, in accordance with various aspects of the present disclosure.
FIG. 2B is a diagram illustrating an example of DL channels within a subframe, in accordance with various aspects of the present disclosure.
FIG. 2C is a diagram illustrating an example of a second frame, in accordance with various aspects of the present disclosure.
FIG. 2D is a diagram illustrating an example of UL channels within a subframe, in accordance with various aspects of the present disclosure.
FIG. 3 is a diagram illustrating an example of a first wireless device and a second wireless device in wireless communication, in accordance with various aspects of the present disclosure.
FIG. 4 is an example slot diagram for sidelink communication, in accordance with various aspects of the present disclosure.
FIGs. 5A, 5B, and 5C illustrate example diagrams of wireless communication including transmissions that may be retransmitted as a network coding transmission, in accordance with various aspects of the present disclosure.
FIG. 6 illustrates an example time diagram showing resources for staggered feedback across multiple slots for a network coding transmission, in accordance with various aspects of the present disclosure.
FIG. 7 illustrates an example communication flow including staggered feedback across multiple slots for a network coding transmission, in accordance with various aspects of the present disclosure.
FIGs. 8A and 8B illustrate example aspects of feedback resources for staggered feedback in response to a network coding transmission, in accordance with various aspects of the present disclosure.
FIGs. 9A and 9B illustrate example aspects of feedback resources based on distance for staggered feedback in response to a network coding transmission, in accordance with various aspects of the present disclosure.
FIGs. 10A and 10B illustrate example aspects of feedback resources for staggered feedback in response to a network coding transmission, in accordance with various aspects of the present disclosure.
FIGs. 11A and 11B illustrate example aspects of feedback resources for staggered feedback in response to a network coding transmission, in accordance with various aspects of the present disclosure.
FIGs. 12A and 12B are flowcharts of methods of wireless communication including staggered feedback in response to a network coding transmission, in accordance with various aspects of the present disclosure.
FIG. 13 is a diagram illustrating an example of a hardware implementation for an example apparatus, in accordance with various aspects of the present disclosure.
FIG. 14 is a flowchart of a method of wireless communication including staggered feedback in response to a network coding transmission, in accordance with various aspects of the present disclosure.
FIG. 15 is a diagram illustrating an example of a hardware implementation for an example apparatus, in accordance with various aspects of the present disclosure.

### DETAILED DESCRIPTION

Network coding may increase system capacity and improve resource utilization by reducing the number of individual retransmissions, while maintaining system performance by providing the combined retransmission of multiple packets in the network coding transmission. Resources are used more efficiently, because two resources would be used for individual retransmissions, whereas a single resource can be used for the network coded transmission. The network encoded retransmission of multiple packets may enable an increase in the number of transmitters (e.g., UEs) or in the amount of traffic per transmitter (e.g., per UE). As well, the reliability of the communication may be improved, because the receiving UEs may use information from previously received packets in the network coding transmission to decode one or more packets that were not correctly received in the initial transmission. Instead of simply relaying packets of information the encoding device may take multiple packets and combine them together for transmission. The combination of packets may improve information flow in a network. In some aspects, the receiving UEs may provide feedback (e.g., ACK/NACK feedback) to the encoding device for the network encoded transmission.

Aspects presented herein provide a way for receiving UEs to provide feedback to an encoding device, such as a network encoder, which allows for feedback from large numbers of UEs even with limited feedback resources (e.g., PSFCH resources). As presented herein, the feedback for a network coding packet may be staggered across multiple slots, in order to enable increased numbers of receiving UEs to provide their feedback. The encoding device may configure the receiving UEs and/or indicate to the receiving UEs to use feedback staggering based on various metrics. The aspects presented herein may enable the encoding device to receive feedback from an increased number of UEs. Aspects, including the various metrics for feedback staggering, may prioritize some feedback in earlier time periods and/or may improve the reception of some feedback through muting of other feedback.

The detailed description set forth below in connection with the appended drawings is intended as a description of various configurations and is not intended to represent the only configurations in which the concepts described herein may be practiced. The detailed description includes specific details for the purpose of providing a thorough understanding of various concepts. However, it will be apparent to those skilled in the art that these concepts may be practiced without these specific details. In some instances, well known structures and components are shown in block diagram form in order to avoid obscuring such concepts.

Several aspects of telecommunication systems will now be presented with reference to various apparatus and methods. These apparatus and methods will be described in the following detailed description and illustrated in the accompanying drawings by various blocks, components, circuits, processes, algorithms, etc. (collectively referred to as "elements"). These elements may be implemented using electronic hardware, computer software, or any combination thereof. Whether such elements are implemented as hardware or software depends upon the particular application and design constraints imposed on the overall system.

By way of example, an element, or any portion of an element, or any combination of elements may be implemented as a "processing system" that includes one or more processors. Examples of processors include microprocessors, microcontrollers, graphics processing units (GPUs), central processing units (CPUs), application processors, digital signal processors (DSPs), reduced instruction set computing (RISC) processors, systems on a chip (SoC), baseband processors, field programmable gate arrays (FPGAs), programmable logic devices (PLDs), state machines, gated logic, discrete hardware circuits, and other suitable hardware configured to perform the various functionality described throughout this disclosure. One or more processors in the processing system may execute software. Software shall be construed broadly to mean instructions, instruction sets, code, code segments, program code, programs, subprograms, software components, applications, software applications, software packages, routines, subroutines, objects, executables, threads of execution, procedures, functions, etc., whether referred to as software, firmware, middleware, microcode, hardware description language, or otherwise.

Accordingly, in one or more example embodiments, the functions described may be implemented in hardware, software, or any combination thereof. If implemented in software, the functions may be stored on or encoded as one or more instructions or code on a computer-readable medium. Computer-readable media includes computer storage media. Storage media may be any available media that can be accessed by a computer. By way of example, and not limitation, such computer-readable media can comprise a random-access memory (RAM), a read-only memory (ROM), an electrically erasable programmable ROM (EEPROM), optical disk storage, magnetic disk storage, other magnetic storage devices, combinations of the types of computer-readable media, or any other medium that can be used to store computer executable code in the form of instructions or data structures that can be accessed by a computer.

While aspects and implementations are described in this application by illustration to some examples, those skilled in the art will understand that additional implementations and use cases may come about in many different arrangements and scenarios. Innovations described herein may be implemented across many differing platform types, devices, systems, shapes, sizes, and packaging arrangements. For example, implementations and/or uses may come about via integrated chip implementations and other non-module-component based devices (e.g., end-user devices, vehicles, communication devices, computing devices, industrial equipment, retail/purchasing devices, medical devices, artificial intelligence (AI)-enabled devices, etc.). While some examples may or may not be specifically directed to use cases or applications, a wide assortment of applicability of described innovations may occur. Implementations may range a spectrum from chip-level or modular components to non-modular, non-chip-level implementations and further to aggregate, distributed, or original equipment manufacturer (OEM) devices or systems incorporating one or more aspects of the described innovations. In some practical settings, devices incorporating described aspects and features may also include additional components and features for implementation and practice of claimed and described aspect. For example, transmission and reception of wireless signals necessarily includes a number of components for analog and digital purposes (e.g., hardware components including antenna, RF-chains, power amplifiers, modulators, buffer, processor(s), interleaver, adders/summers, etc.). It is intended that innovations described herein may be practiced in a wide variety of devices, chip-level components, systems, distributed arrangements, aggregated or disaggregated components, end-user devices, etc. of varying sizes, shapes, and constitution.

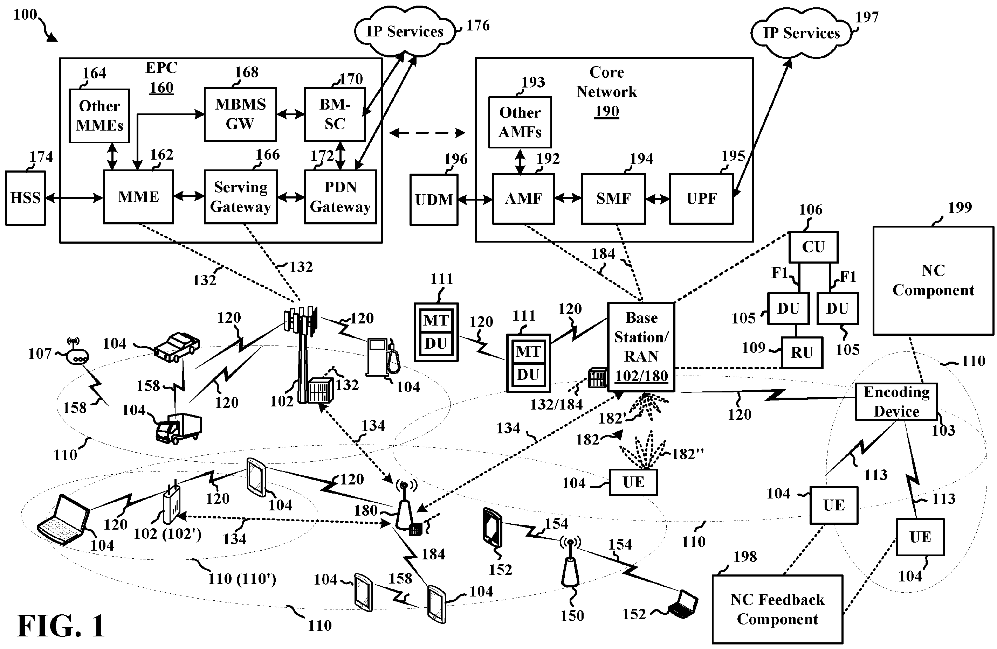

FIG. 1 is a diagram illustrating an example of a wireless communications system and an access network 100. The wireless communications system (also referred to as a wireless wide area network (WWAN)) includes base stations 102, UEs 104, an Evolved Packet Core (EPC) 160, and another core network 190 (e.g., a 5G Core (5GC)). The base stations 102 may include macrocells (high power cellular base station) and/or small cells (low power cellular base station). The macrocells include base stations. The small cells include femtocells, picocells, and microcells.

The base stations 102 configured for 4G LTE (collectively referred to as Evolved Universal Mobile Telecommunications System (UMTS) Terrestrial Radio Access Network (E-UTRAN)) may interface with the EPC 160 through first backhaul links 132 (e.g., S1 interface). The base stations 102 configured for 5G NR (collectively referred to as Next Generation RAN (NG-RAN)) may interface with core network 190 through second backhaul links 184. In addition to other functions, the base stations 102 may perform one or more of the following functions: transfer of user data, radio channel ciphering and deciphering, integrity protection, header compression, mobility control functions (e.g., handover, dual connectivity), inter-cell interference coordination, connection setup and release, load balancing, distribution for non-access stratum (NAS) messages, NAS node selection, synchronization, radio access network (RAN) sharing, multimedia broadcast multicast service (MBMS), subscriber and equipment trace, RAN information management (RIM), paging, positioning, and delivery of warning messages. The base stations 102 may communicate directly or indirectly (e.g., through the EPC 160 or core network 190) with each other over third backhaul links 134 (e.g., X2 interface). The first backhaul links 132, the second backhaul links 184 (e.g., Xn interface), and the third backhaul links 134 may be wired or wireless.

In some aspects, a base station 102 or 180 may be referred as a RAN and may include aggregated or disaggregated components. As an example of a disaggregated RAN, a base station may include a central unit (CU) 106, one or more distributed units (DU) 105, and/or one or more remote units (RU) 109, as illustrated in FIG. 1. ARAN may be disaggregated with a split between an RU 109 and an aggregated CU/DU. A RAN may be disaggregated with a split between the CU 106, the DU 105, and the RU 109. A RAN may be disaggregated with a split between the CU 106 and an aggregated DU/RU. The CU 106 and the one or more DUs 105 may be connected via an F1 interface. A DU 105 and an RU 109 may be connected via a fronthaul interface. A connection between the CU 106 and a DU 105 may be referred to as a midhaul, and a connection between a DU 105 and an RU 109 may be referred to as a fronthaul. The connection between the CU 106 and the core network may be referred to as the backhaul. The RAN may be based on a functional split between various components of the RAN, e.g., between the CU 106, the DU 105, or the RU 109. The CU may be configured to perform one or more aspects of a wireless communication protocol, e.g., handling one or more layers of a protocol stack, and the DU(s) may be configured to handle other aspects of the wireless communication protocol, e.g., other layers of the protocol stack. In different implementations, the split between the layers handled by the CU and the layers handled by the DU may occur at different layers of a protocol stack. As one, non-limiting example, a DU 105 may provide a logical node to host a radio link control (RLC) layer, a medium access control (MAC) layer, and at least a portion of a physical (PHY) layer based on the functional split. An RU may provide a logical node configured to host at least a portion of the PHY layer and radio frequency (RF) processing. A CU 106 may host higher layer functions, e.g., above the RLC layer, such as a service data adaptation protocol (SDAP) layer, a packet data convergence protocol (PDCP) layer. In other implementations, the split between the layer functions provided by the CU, DU, or RU may be different.

An access network may include one or more integrated access and backhaul (IAB) nodes 111 that exchange wireless communication with a UE 104 or other IAB node 111 to provide access and backhaul to a core network. In an IAB network of multiple IAB nodes, an anchor node may be referred to as an IAB donor. The IAB donor may be a base station 102 or 180 that provides access to a core network 190 or EPC 160 and/or control to one or more IAB nodes 111. The IAB donor may include a CU 106 and a DU 105. IAB nodes 111 may include a DU 105 and a mobile termination (MT). The DU 105 of an IAB node 111 may operate as a parent node, and the MT may operate as a child node.

The base stations 102 may wirelessly communicate with the UEs 104. Each of the base stations 102 may provide communication coverage for a respective geographic coverage area 110. There may be overlapping geographic coverage areas 110. For example, the small cell 102' may have a coverage area 110' that overlaps the coverage area 110 of one or more macro base stations 102. A network that includes both small cell and macrocells may be known as a heterogeneous network. A heterogeneous network may also include Home Evolved Node Bs (eNBs) (HeNBs), which may provide service to a restricted group known as a closed subscriber group (CSG). The communication links 120 between the base stations 102 and the UEs 104 may include uplink (UL) (also referred to as reverse link) transmissions from a UE 104 to a base station 102 and/or downlink (DL) (also referred to as forward link) transmissions from a base station 102 to a UE 104. The communication links 120 may use multiple-input and multiple-output (MIMO) antenna technology, including spatial multiplexing, beamforming, and/or transmit diversity. The communication links may be through one or more carriers. The base stations 102 / UEs 104 may use spectrum up to Y MHz (e.g., 5, 10, 15, 20, 100, 400, etc. MHz) bandwidth per carrier allocated in a carrier aggregation of up to a total of *Yx* MHz (*x* component carriers) used for transmission in each direction. The carriers may or may not be adjacent to each other. Allocation of carriers may be asymmetric with respectto DL and UL (e.g., more or fewer carriers may be allocated for DL than for UL). The component carriers may include a primary component carrier and one or more secondary component carriers. A primary component carrier may be referred to as a primary cell (PCell) and a secondary component carrier may be referred to as a secondary cell (SCell).

Certain UEs 104 may communicate with each other using device-to-device (D2D) communication link 158. The D2D communication link 158 may use the DL/UL WWAN spectrum. The D2D communication link 158 may use one or more sidelink channels, such as a physical sidelink broadcast channel (PSBCH), a physical sidelink discovery channel (PSDCH), a physical sidelink shared channel (PSSCH), and a physical sidelink control channel (PSCCH). D2D communication may be through a variety of wireless D2D communications systems, such as for example, WiMedia, Bluetooth, ZigBee, Wi-Fi based on the Institute of Electrical and Electronics Engineers (IEEE) 802.11 standard, LTE, or NR.

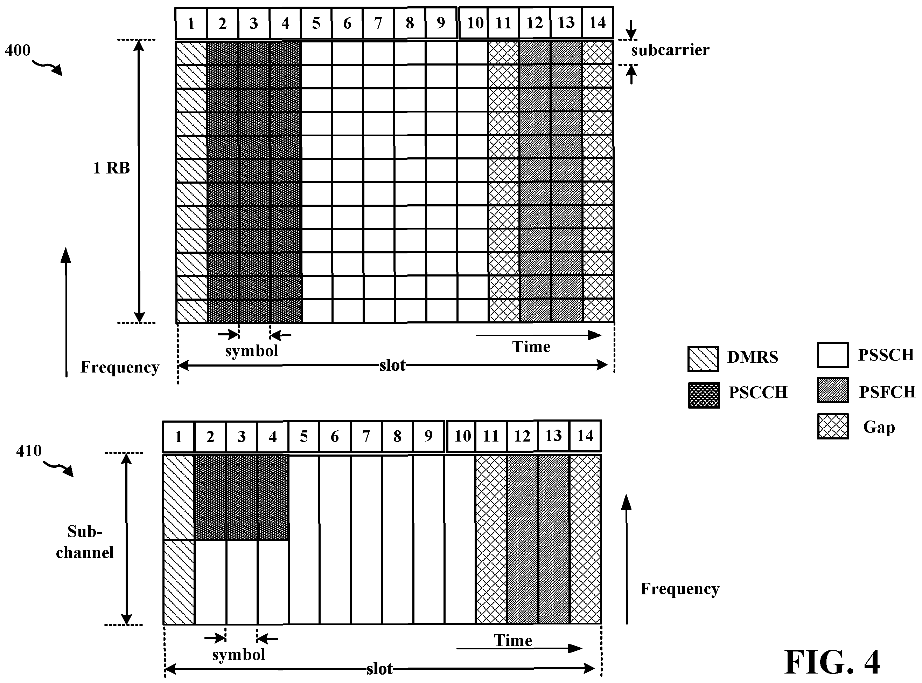

Some examples of sidelink communication may include vehicle-based communication devices that can communicate from vehicle-to-vehicle (V2V), vehicle-to-infrastructure (V2I) (e.g., from the vehicle-based communication device to road infrastructure nodes such as a Road Side Unit (RSU)), vehicle-to-network (V2N) (e.g., from the vehicle-based communication device to one or more network nodes, such as a base station), vehicle-to-pedestrian (V2P), cellular vehicle-to-everything (C-V2X), and/or a combination thereof and/or with other devices, which can be collectively referred to as vehicle-to-anything (V2X) communications. Sidelink communication may be based on V2X or other D2D communication, such as Proximity Services (ProSe), etc. In addition to UEs, sidelink communication may also be transmitted and received by other transmitting and receiving devices, such as Road Side Unit (RSU) 107, etc. Sidelink communication may be exchanged using a PC5 interface, such as described in connection with the example in FIG. 4. Although the following description, including the example slot structure of FIG 4, may provide examples for sidelink communication in connection with 5G NR, the concepts described herein may be applicable to other similar areas, such as LTE, LTE-A, CDMA, GSM, and other wireless technologies.

The wireless communications system may further include a Wi-Fi access point (AP) 150 in communication with Wi-Fi stations (STAs) 152 via communication links 154, e.g., in a 5 GHz unlicensed frequency spectrum or the like. When communicating in an unlicensed frequency spectrum, the STAs 152 / AP 150 may perform a clear channel assessment (CCA) prior to communicating in order to determine whether the channel is available.

The small cell 102' may operate in a licensed and/or an unlicensed frequency spectrum. When operating in an unlicensed frequency spectrum, the small cell 102' may employ NR and use the same unlicensed frequency spectrum (e.g., 5 GHz, or the like) as used by the Wi-Fi AP 150. The small cell 102', employing NR in an unlicensed frequency spectrum, may boost coverage to and/or increase capacity of the access network.

The electromagnetic spectrum is often subdivided, based on frequency/wavelength, into various classes, bands, channels, etc. In 5G NR, two initial operating bands have been identified as frequency range designations FR1 (410 MHz - 7.125 GHz) and FR2 (24.25 GHz - 52.6 GHz). Although a portion of FR1 is greater than 6 GHz, FR1 is often referred to (interchangeably) as a "sub-6 GHz" band in various documents and articles. A similar nomenclature issue sometimes occurs with regard to FR2, which is often referred to (interchangeably) as a "millimeter wave" band in documents and articles, despite being different from the extremely high frequency (EHF) band (30 GHz - 300 GHz) which is identified by the International Telecommunications Union (ITU) as a "millimeter wave" band.

The frequencies between FR1 and FR2 are often referred to as mid-band frequencies. Recent 5G NR studies have identified an operating band for these mid-band frequencies as frequency range designation FR3 (7.125 GHz - 24.25 GHz). Frequency bands falling within FR3 may inherit FR1 characteristics and/or FR2 characteristics, and thus may effectively extend features of FR1 and/or FR2 into mid-band frequencies. In addition, higher frequency bands are currently being explored to extend 5G NR operation beyond 52.6 GHz. For example, three higher operating bands have been identified as frequency range designations FR2-2 (52.6 GHz - 71 GHz), FR4 (52.6 GHz - 114.25 GHz), and FR5 (114.25 GHz - 300 GHz). Each of these higher frequency bands falls within the EHF band.

With the above aspects in mind, unless specifically stated otherwise, it should be understood that the term "sub-6 GHz" or the like if used herein may broadly represent frequencies that may be less than 6 GHz, may be within FR1, or may include mid-band frequencies. Further, unless specifically stated otherwise, it should be understood that the term "millimeter wave" or the like if used herein may broadly represent frequencies that may include mid-band frequencies, may be within FR2, FR4, FR2-2, and/or FR5, or may be within the EHF band.

A base station 102, whether a small cell 102' or a large cell (e.g., macro base station), may include and/or be referred to as an eNB, gNodeB (gNB), or another type of base station. Some base stations, such as gNB 180 may operate in a traditional sub 6 GHz spectrum, in millimeter wave frequencies, and/or near millimeter wave frequencies in communication with the UE 104. When the gNB 180 operates in millimeter wave or near millimeter wave frequencies, the gNB 180 may be referred to as a millimeter wave base station. The millimeter wave base station 180 may utilize beamforming 182 with the UE 104 to compensate for the path loss and short range. The base station 180 and the UE 104 may each include a plurality of antennas, such as antenna elements, antenna panels, and/or antenna arrays to facilitate the beamforming.

The base station 180 may transmit a beamformed signal to the UE 104 in one or more transmit directions 182'. The UE 104 may receive the beamformed signal from the base station 180 in one or more receive directions 182". The UE 104 may also transmit a beamformed signal to the base station 180 in one or more transmit directions. The base station 180 may receive the beamformed signal from the UE 104 in one or more receive directions. The base station 180 / UE 104 may perform beam training to determine the best receive and transmit directions for each of the base station 180 / UE 104. The transmit and receive directions for the base station 180 may or may not be the same. The transmit and receive directions for the UE 104 may or may not be the same.

The EPC 160 may include a Mobility Management Entity (MME) 162, other MMEs 164, a Serving Gateway 166, a Multimedia Broadcast Multicast Service (MBMS) Gateway 168, a Broadcast Multicast Service Center (BM-SC) 170, and a Packet Data Network (PDN) Gateway 172. The MME 162 may be in communication with a Home Subscriber Server (HSS) 174. The MME 162 is the control node that processes the signaling between the UEs 104 and the EPC 160. Generally, the MME 162 provides bearer and connection management. All user Internet protocol (IP) packets are transferred through the Serving Gateway 166, which itself is connected to the PDN Gateway 172. The PDN Gateway 172 provides UE IP address allocation as well as other functions. The PDN Gateway 172 and the BM-SC 170 are connected to the IP Services 176. The IP Services 176 may include the Internet, an intranet, an IP Multimedia Subsystem (IMS), a PS Streaming Service, and/or other IP services. The BM-SC 170 may provide functions for MBMS user service provisioning and delivery. The BM-SC 170 may serve as an entry point for content provider MBMS transmission, may be used to authorize and initiate MBMS Bearer Services within a public land mobile network (PLMN), and may be used to schedule MBMS transmissions. The MBMS Gateway 168 may be used to distribute MBMS traffic to the base stations 102 belonging to a Multicast Broadcast Single Frequency Network (NMSFN) area broadcasting a particular service, and may be responsible for session management (start/stop) and for collecting eMBMS related charging information.

The core network 190 may include an Access and Mobility Management Function (AMF) 192, other AMFs 193, a Session Management Function (SMF) 194, and a User Plane Function (UPF) 195. The AMF 192 may be in communication with a Unified Data Management (UDM) 196. The AMF 192 is the control node that processes the signaling between the UEs 104 and the core network 190. Generally, the AMF 192 provides QoS flow and session management. All user Internet protocol (IP) packets are transferred through the UPF 195. The UPF 195 provides UE IP address allocation as well as other functions. The UPF 195 is connected to the IP Services 197. The IP Services 197 may include the Internet, an intranet, an IP Multimedia Subsystem (IMS), a Packet Switch (PS) Streaming (PSS) Service, and/or other IP services.

The base station may include and/or be referred to as a gNB, Node B, eNB, an access point, a base transceiver station, a radio base station, a radio transceiver, a transceiver function, a basic service set (BSS), an extended service set (ESS), a transmit reception point (TRP), or some other suitable terminology. The base station 102 provides an access point to the EPC 160 or core network 190 for a UE 104. Examples of UEs 104 include a cellular phone, a smart phone, a session initiation protocol (SIP) phone, a laptop, a personal digital assistant (PDA), a satellite radio, a global positioning system, a multimedia device, a video device, a digital audio player (e.g., MP3 player), a camera, a game console, a tablet, a smart device, a wearable device, a vehicle, an electric meter, a gas pump, a large or small kitchen appliance, a healthcare device, an implant, a sensor/actuator, a display, or any other similar functioning device. Some of the UEs 104 may be referred to as IoT devices (e.g., parking meter, gas pump, toaster, vehicles, heart monitor, etc.). The UE 104 may also be referred to as a station, a mobile station, a subscriber station, a mobile unit, a subscriber unit, a wireless unit, a remote unit, a mobile device, a wireless device, a wireless communications device, a remote device, a mobile subscriber station, an access terminal, a mobile terminal, a wireless terminal, a remote terminal, a handset, a user agent, a mobile client, a client, or some other suitable terminology. In some scenarios, the term UE may also apply to one or more companion devices such as in a device constellation arrangement. One or more of these devices may collectively access the network and/or individually access the network.

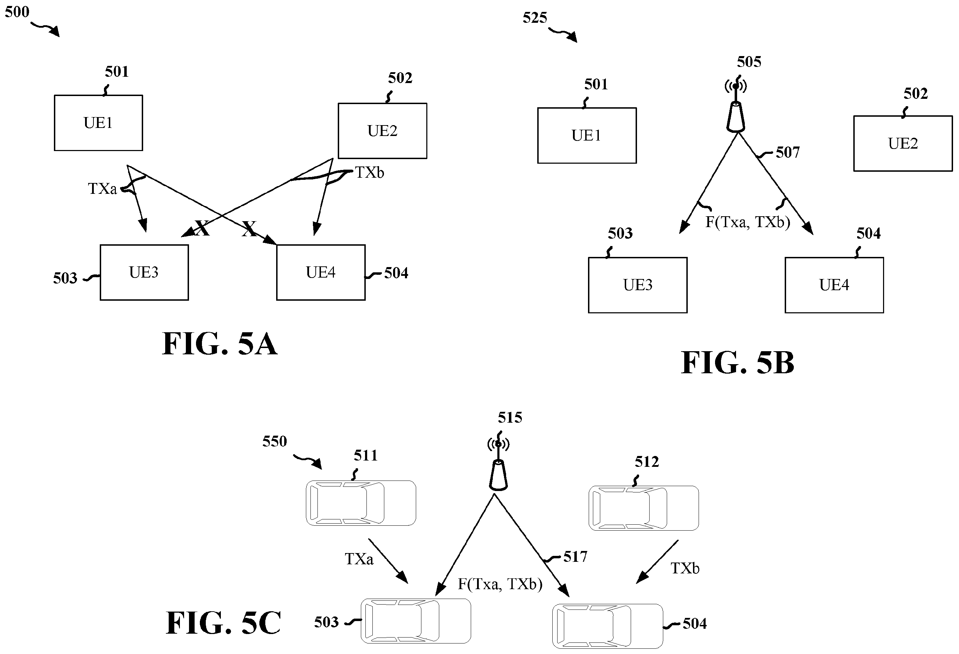

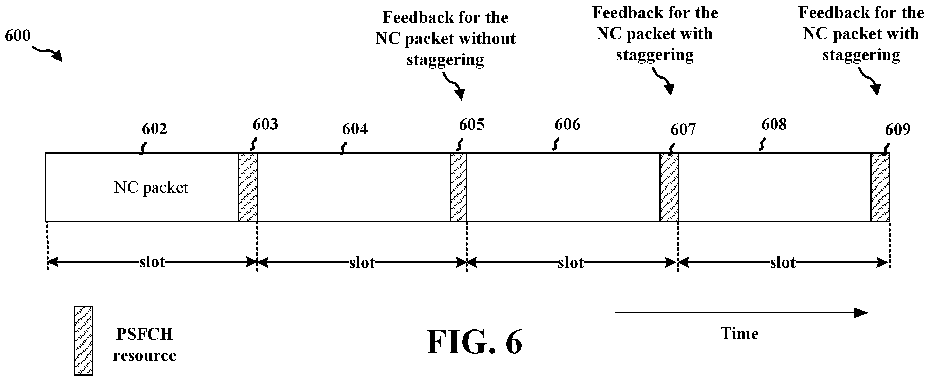

Referring again to FIG. 1, in some aspects, a UE 104 may include an NC feedback component 198 that is configured to receive a network coding transmission 113 and to transmit feedback in one time period of multiple time periods associated with the network coding packet. The network coding transmission may include aspects described in connection with FIGs. 5A and 5B. The feedback among different UEs may be staggered, e.g., as described in connection with FIG. 6, or any of FIGs. 6-12. In certain aspects, an encoding device 103 may include an NC feedback component 199 configured to transmit a network coding packet and to receive feedback from a plurality of UEs across the multiple time periods. The multiple time periods may correspond to multiple PSFCH slots.

Although the following description may be focused on 5G NR, the concepts described herein may be applicable to other similar areas, such as LTE, LTE-A, CDMA, GSM, and other wireless technologies.

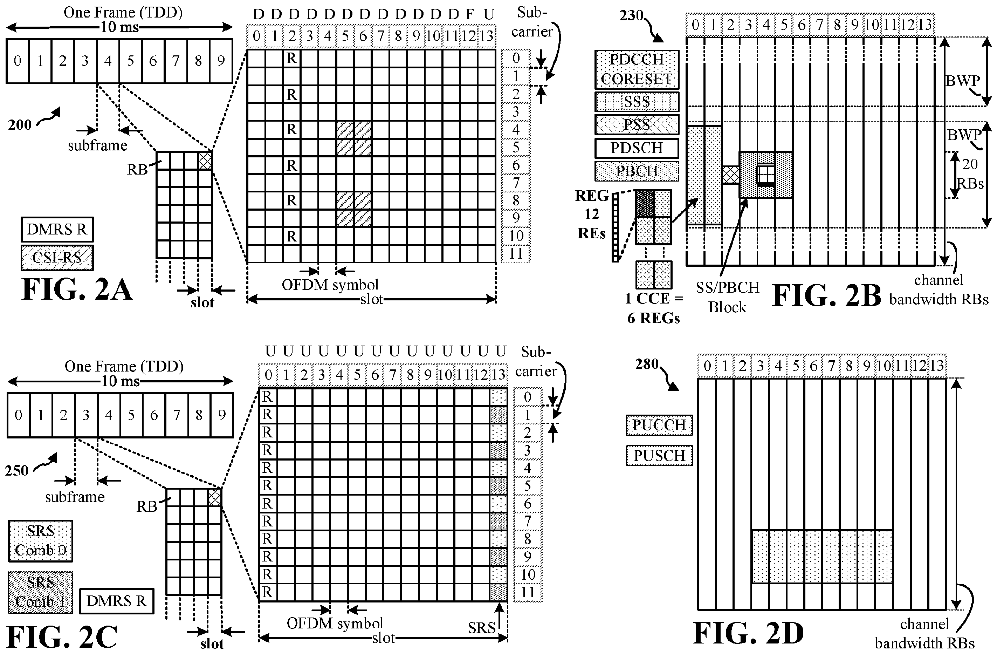

FIG. 2A is a diagram 200 illustrating an example of a first subframe within a 5G NR frame structure. FIG. 2B is a diagram 230 illustrating an example of DL channels within a 5G NR subframe. FIG. 2C is a diagram 250 illustrating an example of a second subframe within a 5G NR frame structure. FIG. 2D is a diagram 280 illustrating an example of UL channels within a 5G NR subframe. The 5G NR frame structure may be frequency division duplexed (FDD) in which for a particular set of subcarriers (carrier system bandwidth), subframes within the set of subcarriers are dedicated for either DL or UL, or may be time division duplexed (TDD) in which for a particular set of subcarriers (carrier system bandwidth), subframes within the set of subcarriers are dedicated for both DL and UL. In the examples provided by FIGs. 2A, 2C, the 5G NR frame structure is assumed to be TDD, with subframe 4 being configured with slot format 28 (with mostly DL), where D is DL, U is UL, and F is flexible for use between DL/UL, and subframe 3 being configured with slot format 1 (with all UL). While subframes 3, 4 are shown with slot formats 1, 28, respectively, any particular subframe may be configured with any of the various available slot formats 0-61. Slot formats 0, 1 are all DL, UL, respectively. Other slot formats 2-61 include a mix of DL, UL, and flexible symbols. UEs are configured with the slot format (dynamically through DL control information (DCI), or semi-statically/statically through radio resource control (RRC) signaling) through a received slot format indicator (SFI). Note that the description *infra* applies also to a 5G NR frame structure that is TDD.

FIGs. 2A-2D illustrate a frame structure, and the aspects of the present disclosure may be applicable to other wireless communication technologies, which may have a different frame structure and/or different channels. A frame (10 ms) may be divided into 10 equally sized subframes (1 ms). Each subframe may include one or more time slots. Subframes may also include mini-slots, which may include 7, 4, or 2 symbols. Each slot may include 14 or 12 symbols, depending on whether the cyclic prefix (CP) is normal or extended. For normal CP, each slot may include 14 symbols, and for extended CP, each slot may include 12 symbols. The symbols on DL may be CP orthogonal frequency division multiplexing (OFDM) (CP-OFDM) symbols. The symbols on UL may be CP-OFDM symbols (for high throughput scenarios) or discrete Fourier transform (DFT) spread OFDM (DFT-s-OFDM) symbols (also referred to as single carrier frequency-division multiple access (SC-FDMA) symbols) (for power limited scenarios; limited to a single stream transmission). The number of slots within a subframe is based on the CP and the numerology. The numerology defines the subcarrier spacing (SCS) and, effectively, the symbol length/duration, which is equal to 1/SCS.

| *µ* | **SCS Δ*f* = 2*^{µ}* · 15[kHz]** | **Cyclic prefix** |
|---|---|---|
| 0 | 15 | Normal |
| 1 | 30 | Normal |
| 2 | 60 | Normal, Extended |
| 3 | 120 | Normal |
| 4 | 240 | Normal |

For normal CP (14 symbols/slot), different numerologies µ 0 to 4 allow for 1, 2, 4, 8, and 16 slots, respectively, per subframe. For extended CP, the numerology 2 allows for 4 slots per subframe. Accordingly, for normal CP and numerology µ, there are 14 symbols/slot and 2^{µ} slots/subframe. The subcarrier spacing may be equal to 2*^{µ}* * 15 kHz, where *µ* is the numerology 0 to 4. As such, the numerology µ=0 has a subcarrier spacing of 15 kHz and the numerology µ=4 has a subcarrier spacing of 240 kHz. The symbol length/duration is inversely related to the subcarrier spacing. FIGs. 2A-2D provide an example of normal CP with 14 symbols per slot and numerology µ=2 with 4 slots per subframe. The slot duration is 0.25 ms, the subcarrier spacing is 60 kHz, and the symbol duration is approximately 16.67 µs. Within a set of frames, there may be one or more different bandwidth parts (BWPs) (see FIG. 2B) that are frequency division multiplexed. Each BWP may have a particular numerology and CP (normal or extended).

A resource grid may be used to represent the frame structure. Each time slot includes a resource block (RB) (also referred to as physical RBs (PRBs)) that extends 12 consecutive subcarriers. The resource grid is divided into multiple resource elements (REs). The number of bits carried by each RE depends on the modulation scheme.

As illustrated in FIG. 2A, some of the REs carry reference (pilot) signals (RS) for the UE. The RS may include demodulation RS (DM-RS) (indicated asR for one particular configuration, but other DM-RS configurations are possible) and channel state information reference signals (CSI-RS) for channel estimation at the UE. The RS may also include beam measurement RS (BRS), beam refinement RS (BRRS), and phase tracking RS (PT-RS).

FIG. 2B illustrates an example of various DL channels within a subframe of a frame. The physical downlink control channel (PDCCH) carries DCI within one or more control channel elements (CCEs) (e.g., 1, 2, 4, 8, or 16 CCEs), each CCE including six RE groups (REGs), each REG including 12 consecutive REs in an OFDM symbol of an RB. A PDCCH within one BWP may be referred to as a control resource set (CORESET). A UE is configured to monitor PDCCH candidates in a PDCCH search space (e.g., common search space, UE-specific search space) during PDCCH monitoring occasions on the CORESET, where the PDCCH candidates have different DCI formats and different aggregation levels. Additional BWPs may be located at greater and/or lower frequencies across the channel bandwidth. A primary synchronization signal (PSS) may be within symbol 2 of particular subframes of a frame. The PSS is used by a UE 104 to determine subframe/symbol timing and a physical layer identity. A secondary synchronization signal (SSS) may be within symbol 4 of particular subframes of a frame. The SSS is used by a UE to determine a physical layer cell identity group number and radio frame timing. Based on the physical layer identity and the physical layer cell identity group number, the UE can determine a physical cell identifier (PCI). Based on the PCI, the UE can determine the locations of the DM-RS. The physical broadcast channel (PBCH), which carries a master information block (MIB), may be logically grouped with the PSS and SSS to form a synchronization signal (SS)/PBCH block (also referred to as SS block (SSB)). The MIB provides a number of RBs in the system bandwidth and a system frame number (SFN). The physical downlink shared channel (PDSCH) carries user data, broadcast system information not transmitted through the PBCH such as system information blocks (SIBs), and paging messages.

As illustrated in FIG. 2C, some of the REs carry DM-RS (indicated as R for one particular configuration, but other DM-RS configurations are possible) for channel estimation at the base station. The UE may transmit DM-RS for the physical uplink control channel (PUCCH) and DM-RS for the physical uplink shared channel (PUSCH). The PUSCH DM-RS may be transmitted in the first one or two symbols of the PUSCH. The PUCCH DM-RS may be transmitted in different configurations depending on whether short or long PUCCHs are transmitted and depending on the particular PUCCH format used. The UE may transmit sounding reference signals (SRS). The SRS may be transmitted in the last symbol of a subframe. The SRS may have a comb structure, and a UE may transmit SRS on one of the combs. The SRS may be used by a base station for channel quality estimation to enable frequencydependent scheduling on the UL.

FIG. 2D illustrates an example of various UL channels within a subframe of a frame. The PUCCH may be located as indicated in one configuration. The PUCCH carries uplink control information (UCI), such as scheduling requests, a channel quality indicator (CQI), a precoding matrix indicator (PMI), a rank indicator (RI), and hybrid automatic repeat request (HARQ) acknowledgment (ACK) (HARQ-ACK) feedback (i.e., one or more HARQ ACK bits indicating one or more ACK and/or negative ACK (NACK)). The PUSCH carries data, and may additionally be used to carry a buffer status report (BSR), a power headroom report (PHR), and/or UCI.

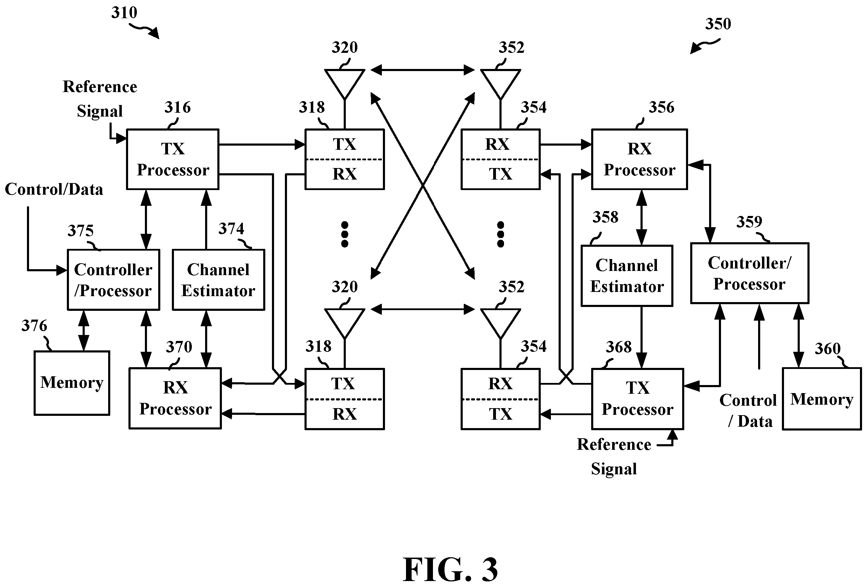

FIG. 3 is a block diagram of a first wireless communication device 310 in communication with a second wireless communication device 350. In some aspects, the device 310 may be an encoding device (e.g., encoding device 103, 505, 704), and the device 350 may be a receiving device (e.g., UE 104, 503, 504, 702, or 706). In some examples, the devices 310 and 350 may communicate based on sidelink, such as V2X or other D2D communication. The communication may be based on sidelink using a PC5 interface. The devices 310 and the 350 may comprise a UE, an RSU, a base station, etc. In some aspects, the device 310 may be a base station, and the device 350 may be a UE, and the communication may be over an access link, e.g., a Uu link. In the DL, IP packets from the EPC 160 may be provided to a controller/processor 375. The controller/processor 375 implements layer 3 and layer 2 functionality. Layer 3 includes a radio resource control (RRC) layer, and layer 2 includes a service data adaptation protocol (SDAP) layer, a packet data convergence protocol (PDCP) layer, a radio link control (RLC) layer, and a medium access control (MAC) layer. The controller/processor 375 provides RRC layer functionality associated with broadcasting of system information (e.g., MIB, SIBs), RRC connection control (e.g., RRC connection paging, RRC connection establishment, RRC connection modification, and RRC connection release), inter radio access technology (RAT) mobility, and measurement configuration for UE measurement reporting; PDCP layer functionality associated with header compression / decompression, security (ciphering, deciphering, integrity protection, integrity verification), and handover support functions; RLC layer functionality associated with the transfer of upper layer packet data units (PDUs), error correction through ARQ, concatenation, segmentation, and reassembly of RLC service data units (SDUs), re-segmentation of RLC data PDUs, and reordering of RLC data PDUs; and MAC layer functionality associated with mapping between logical channels and transport channels, multiplexing of MAC SDUs onto transport blocks (TBs), demultiplexing of MAC SDUs from TBs, scheduling information reporting, error correction through HARQ, priority handling, and logical channel prioritization.

The transmit (TX) processor 316 and the receive (RX) processor 370 implement layer 1 functionality associated with various signal processing functions. Layer 1, which includes a physical (PHY) layer, may include error detection on the transport channels, forward error correction (FEC) coding/decoding of the transport channels, interleaving, rate matching, mapping onto physical channels, modulation/demodulation of physical channels, and MIMO antenna processing. The TX processor 316 handles mapping to signal constellations based on various modulation schemes (e.g., binary phase-shift keying (BPSK), quadrature phase-shift keying (QPSK), M-phase-shift keying (M-PSK), M-quadrature amplitude modulation (M-QAM)). The coded and modulated symbols may then be split into parallel streams. Each stream may then be mapped to an OFDM subcarrier, multiplexed with a reference signal (e.g., pilot) in the time and/or frequency domain, and then combined together using an Inverse Fast Fourier Transform (IFFT) to produce a physical channel carrying a time domain OFDM symbol stream. The OFDM stream is spatially precoded to produce multiple spatial streams. Channel estimates from a channel estimator 374 may be used to determine the coding and modulation scheme, as well as for spatial processing. The channel estimate may be derived from a reference signal and/or channel condition feedback transmitted by the device 350. Each spatial stream may then be provided to a different antenna 320 via a separate transmitter 318 TX. Each transmitter 318 TX may modulate a radio frequency (RF) carrier with a respective spatial stream for transmission.

At the device 350, each receiver 354 RX receives a signal through its respective antenna 352. Each receiver 354 RX recovers information modulated onto an RF carrier and provides the information to the receive (RX) processor 356. The TX processor 368 and the RX processor 356 implement layer 1 functionality associated with various signal processing functions. The RX processor 356 may perform spatial processing on the information to recover any spatial streams destined for the device 350. If multiple spatial streams are destined for the device 350, they may be combined by the RX processor 356 into a single OFDM symbol stream. The RX processor 356 then converts the OFDM symbol stream from the time-domain to the frequency domain using a Fast Fourier Transform (FFT). The frequency domain signal comprises a separate OFDM symbol stream for each subcarrier of the OFDM signal. The symbols on each subcarrier, and the reference signal, are recovered and demodulated by determining the most likely signal constellation points transmitted by the device 310. These soft decisions may be based on channel estimates computed by the channel estimator 358. The soft decisions are then decoded and deinterleaved to recover the data and control signals that were originally transmitted by the device 310 on the physical channel. The data and control signals are then provided to the controller/processor 359, which implements layer 3 and layer 2 functionality.

The controller/processor 359 can be associated with a memory 360 that stores program codes and data. The memory 360 may be referred to as a computer-readable medium. In the UL, the controller/processor 359 provides demultiplexing between transport and logical channels, packet reassembly, deciphering, header decompression, and control signal processing to recover IP packets from the EPC 160. The controller/processor 359 is also responsible for error detection using an ACK and/or NACK protocol to support HARQ operations.

Similar to the functionality described in connection with the DL transmission by the device 310, the controller/processor 359 provides RRC layer functionality associated with system information (e.g., MIB, SIBs) acquisition, RRC connections, and measurement reporting; PDCP layer functionality associated with header compression / decompression, and security (ciphering, deciphering, integrity protection, integrity verification); RLC layer functionality associated with the transfer of upper layer PDUs, error correction through ARQ, concatenation, segmentation, and reassembly of RLC SDUs, re-segmentation of RLC data PDUs, and reordering of RLC data PDUs; and MAC layer functionality associated with mapping between logical channels and transport channels, multiplexing of MAC SDUs onto TBs, demultiplexing of MAC SDUs from TBs, scheduling information reporting, error correction through HARQ, priority handling, and logical channel prioritization.

Channel estimates derived by a channel estimator 358 from a reference signal or feedback transmitted by the device 310 may be used by the TX processor 368 to select the appropriate coding and modulation schemes, and to facilitate spatial processing. The spatial streams generated by the TX processor 368 may be provided to different antenna 352 via separate transmitters 354TX. Each transmitter 354TX may modulate an RF carrier with a respective spatial stream for transmission.

The UL transmission is processed at the device 310 in a manner similar to that described in connection with the receiver function at the device 350. Each receiver 318RX receives a signal through its respective antenna 320. Each receiver 318RX recovers information modulated onto an RF carrier and provides the information to a RX processor 370.

The controller/processor 375 can be associated with a memory 376 that stores program codes and data. The memory 376 may be referred to as a computer-readable medium. In the UL, the controller/processor 375 provides demultiplexing between transport and logical channels, packet reassembly, deciphering, header decompression, control signal processing to recover IP packets from the device 350. IP packets from the controller/processor 375 may be provided to the EPC 160. The controller/processor 375 is also responsible for error detection using an ACK and/or NACK protocol to support HARQ operations.

At least one of the TX processor 368, the RX processor 356, and the controller/processor 359 may be configured to perform aspects in connection with the NC feedback component 198 of FIG. 1.

At least one of the TX processor 316, the RX processor 370, and the controller/processor 375 may be configured to perform aspects in connection with the NC component 199 of FIG. 1.

FIG. 4 includes diagrams 400 and 410 illustrating example aspects of slot structures that may be used for sidelink communication (e.g., between UEs 104, RSU 107, etc.). The slot structure may be within a 5G/NR frame structure in some examples. In other examples, the slot structure may be within an LTE frame structure. Although the following description may be focused on 5G NR, the concepts described herein may be applicable to other similar areas, such as LTE, LTE-A, CDMA, GSM, and other wireless technologies. The example slot structure in FIG. 4 is merely one example, and other sidelink communication may have a different frame structure and/or different channels for sidelink communication. A frame (10 ms) may be divided into 10 equally sized subframes (1 ms). Each subframe may include one or more time slots. Subframes may also include mini-slots, which may include 7, 4, or 2 symbols. Each slot may include 7 or 14 symbols, depending on the slot configuration. For slot configuration 0, each slot may include 14 symbols, and for slot configuration 1, each slot may include 7 symbols. Diagram 400 illustrates a single resource block of a single slot transmission, e.g., which may correspond to a 0.5 ms transmission time interval (TTI). A physical sidelink control channel may be configured to occupy multiple physical resource blocks (PRBs), e.g., 10, 12, 15, 20, or 25 PRBs. The PSCCH may be limited to a single sub-channel. A PSCCH duration may be configured to be 2 symbols or 3 symbols, for example. A sub-channel may comprise 10, 15, 20, 25, 50, 75, or 100 PRBs, for example. The resources for a sidelink transmission may be selected from a resource pool including one or more subchannels. As a non-limiting example, the resource pool may include between 1-27 subchannels. A PSCCH size may be established for a resource pool, e.g., as between 10-100 % of one subchannel for a duration of 2 symbols or 3 symbols. The diagram 410 in FIG. 4 illustrates an example in which the PSCCH occupies about 50% of a subchannel, as one example to illustrate the concept of PSCCH occupying a portion of a subchannel. The physical sidelink shared channel (PSSCH) occupies at least one subchannel. The PSCCH may include a first portion of sidelink control information (SCI), and the PSSCH may include a second portion of SCI in some examples.

A resource grid may be used to represent the frame structure. Each time slot may include a resource block (RB) (also referred to as physical RBs (PRBs)) that extends 12 consecutive subcarriers. The resource grid is divided into multiple resource elements (REs). The number of bits carried by each RE depends on the modulation scheme. As illustrated in FIG. 4, some of the REs may include control information in PSCCH and some REs may include demodulation RS (DMRS). At least one symbol may be used for feedback. FIG. 4 illustrates examples with two symbols for a physical sidelink feedback channel (PSFCH) with adjacent gap symbols. A symbol prior to and/or after the feedback may be used for turnaround between reception of data and transmission of the feedback. The gap enables a device to switch from operating as a transmitting device to prepare to operate as a receiving device, e.g., in the following slot. Data may be transmitted in the remaining REs, as illustrated. The data may comprise the data message described herein. The position of any of the data, DMRS, SCI, feedback, gap symbols, and/or LBT symbols may be different than the example illustrated in FIG. 4. Multiple slots may be aggregated together in some aspects.

The reliability of communication between a transmitting device and a receiving device may be improved through network coding of the communication by an encoding device.

As an example, two or more original transmissions, e.g., two or more initial packets, may be combined through network coding and transmitted as a combination of the initial packets. In an example, a first device may transmit a first packet to a second device, and the second device may transmit a second packet to the first device. Following the transmission of the first and second packets, the encoding device may transmit an encoded combination of the first and second packets, e.g., based on network coding. Each of the devices may decode the packet from the other device in the network coded combination of the packets, with assistance based on the information of their own packet. For example, at the first device, the knowledge of the first packet may assist the first device in decoding the second packet from the network coded transmission of the first and second packet. FIGs, 5A and 5B illustrate another example application of network coding.

FIG. 5A illustrates an example of wireless communication 500 in which a first wireless device (e.g., UE 501) transmits a first transmission TXa, and a second wireless device (e.g., UE 502) transmits a second transmission TXs. A third wireless device (e.g., UE 503) correctly receives the first transmission TXa, but does not correctly receive the second transmission TXb. A fourth wireless device (e.g., UE 504) correctly receives the second transmission TXb, but does not correctly receive the first transmission TXa. The diagram 525 in FIG. 5B illustrates that after the original transmissions of TXa and TXb in FIG. 5A, an encoding device 505 may transmit a transmission 507 that includes a network coding combination of the first transmission TXa and the second transmission TXb. For example, the transmission 507 may be a function of the first transmission TXa and the second transmission TXb, e.g., F(TXa, TXb). The encoding device may be a base station, an RSU, a UE, and IAB node, etc. In some aspects, the original transmissions TXa and TXb may be sidelink transmissions. The UE 503 may use the transmission TXa that it previously received, e.g., as illustrated in FIG. 5A to assist in decoding the second transmission TXb from the transmission 507. The UE 504 may use the transmission TXb that it previously received, e.g., as illustrated in FIG. 5A to assist in decoding the first transmission TXa from the transmission 507. Although this example illustrates two transmissions, the network coding may combine more than two packets in the combined transmission 507. Network coding may improve a network's throughput, efficiency and scalability. Network coding may increase system capacity and improve resource utilization by reducing the number of individual retransmissions, while maintaining system performance by providing the combined retransmission of multiple packets in the network coding transmission. Resources are used more efficiently, because two resources would be used for individual retransmissions of TXa and TXb, whereas a single resource can be used for the network coded transmission 507. The network encoded retransmission of multiple packets may enable an increase in the number of transmitters (e.g., UEs) or in the amount of traffic per transmitter (e.g., per UE). As well, the reliability of the communication may be improved, because the receiving UEs may use information from previously received packets in the network coding transmission 507 to decode one or more packets that were not correctly received in the initial transmission. Instead of simply relaying packets of information the encoding device 505 may take multiple packets and combine them together for transmission. The combination of packets may improve information flow in a network.

In some aspects, network coding, including the aspects presented herein, may be applied for sidelink communication, such as V2X communication. Additionally, or alternatively, the network coding aspects described herein may be applied for nonvehicular sidelink communication. The network coding aspects may also be applied for other types of wireless communication than sidelink. FIG. 5C illustrates an example of network coding 550 similar to FIGs. 5A and 5B for V2X communication. In FIG. 5C, a first UE 511 transmits a first transmission TXa, and a second UE 512 transmits a second transmission TXb. An encoding device 515 may transmit a network coded retransmission 517 of both TXa and TXb, e.g., as described in connection with FIG. 5B. The UEs 503 and 504 may attempt to receive the initial transmissions of TXa and TXb, and may use the network coded retransmission 517 to accurately receive TXa and/or TXb. The encoding device 515 may be an RSU, a base station, or another UE.

The encoding device 505 or 515 may identify two or more packets (e.g., original packet(s) TXa and TXb) for transmitting to the receiving device(s) (e.g., 503 and 504). The encoding device 505 or 515 applies a network coding algorithm to the original packets to generate encoded packets (e.g., 507). The encoding device 505 then transmits the encoded packets (e.g., 507) as a data transmission.

The receiving device(s) (e.g., 503 and 504) may then attempt to decode the received encoded packets (e.g., 507) to reconstruct the original packets (e.g., TXa and TXb).

In some examples, to improve communication between a transmitting device (e.g., any of UE 501, UE 502, and/or encoding device 505) and the receiving device (e.g., 503 and 504), the receiving device may transmit feedback, such as ACK/NACK feedback, that indicates whether a packet has been received accurately. For example, the UE 503 in FIG. 5A may transmit an ACK for TXa and a NACK for TXb, whereas the UE 504 may transmit a NACK for TXa and an ACK for TXb. In some aspects, the UE 501 and the UE 502 may respond to the NACK by retransmitting their respective transmissions. In the example in FIG. 5B, the encoding device 505 may use the feedback to determine which packets to re-transmit with network coding, e.g., at 507.

In some aspects, the encoding device may provide retransmissions for many UEs and may prioritize which packets to retransmit among multiple initial transmissions from multiple UEs. The encoding device may use feedback, e.g., ACK/NACK feedback, to select a subset of packets (or encoded transport block) to include in a network coding transmission. A transport block (TB) is a packet of data that is mapped onto a data channel (e.g., a physical sidelink shared channel (PSSCH), a physical uplink shared channel (PUSCH), a physical downlink shared channel (PDSCH), etc.) for transmission. A transport block may refer to a payload for a physical layer data transmission. In some aspects, the encoding device may select the TBs, or packets, to network encode as a retransmission in order to maximize the change in feedback from NACKs to ACKs. For example, the encoding device may consider the feedback from multiple UEs for multiple packets and may select combinations of packets to network encode that have a higher likelihood of successful receipt. Table 1 illustrates an example of ACK/NACK feedback that may be provided by four UEs (e.g., UE0, UE1, UE2 and UE3) for four packets (e.g., p0, p1, p2, and p3).

**Table 1**

| **Receiving UE** | **p0** | **p1** | **p2** | **p3** |
|---|---|---|---|---|
| **UE0** | ACK | NACK | ACK | |
| **UE1** | ACK | ACK | NACK | NACK |
| **UE2** | NACK | ACK | ACK | ACK |
| **UE3** | ACK | NACK | | ACK |

Table 1 illustrates that the UE0 successfully received p0 and p2, and did not successfully receive p1. The empty cell for p3 indicates absent feedback. The UE1 successfully received p0 and p1, and did not successfully receive p2 and p3. The UE 2 did not successfully receive p0, and successfully received p1, p2, and p3. The UE3 successfully received p0 and p3, did not successfully receive p1, and has absent feedback for p2. The encoding device (e.g., which may also be referred to as an encoder) may assume an ACK for each packet's source UE. Thus, if a fifth UE transmitted p0 and p2, the chart may include an ACK for p0 and p1 for the fifth UE even though the fifth UE does not provide feedback, because the fifth UE is the source of the packets.

Table 2 illustrates an example of possible combinations of packets that the encoding device may transmit with network coding and shows a corresponding indication for the set of four UEs in Table 1 showing the status for the combined packets.

**Table 2**

| **Receiving UE** | **p0+p1** | **p0+p2** | **p0+p3** | **P1+p2** | **p1+p3** | **p2+p3** |
|---|---|---|---|---|---|---|
| **UE0** | ✔ | A | | ✔ | X | |
| **UE1** | A | ✔ | ✔ | ✔ | ✔ | X |
| **UE2** | ✔ | ✔ | ✔ | A | A | A |
| **UE3** | ✔ | | A | | X | |

In Table 2, an "A" indicates that both packets have been received successfully (e.g., decoded successfully) by the corresponding UE, a check mark indicates that the UE successfully decoded one of the packets and did not successfully decode the other packet, an "X" indicates that neither packet was successfully decoded, and an empty entry means that feedback was not received for at least one of the packets. In Table 2, the combination p0+p1 has a highest likelihood in changing a NACK for one of the packets to ACK for each of the UEs, which may be referred to as a NACK-to-ACK flip. The combination of p0+p1 has the most checkmarks indicating that one packet was already successfully received by the corresponding UEs. Thus, transmitting p0+p1 enables three of the four UEs to decode a previously undecoded packet. The UE1 successfully received both of the packets of the combination p0+p1. As the UE0, UE2, and UE3 have successfully received one of the packets, the UEs may use the information for the received packet to assist the UEs in decoding the other packet from the network coded transmission, which increases the likelihood of successful receipt by the UEs. The encoding device may select the combination of p0+p1 to retransmit with network coding.

While the examples in FIGs. 5A-5C and Tables 1 and 2 illustrate the example of network coding for two packets, the encoding device may combine more than 2 packets in a network coding transmission. For example, the encoding device may combine 2 or more packets, e.g., 2 packets, 3 packets, 4 packets, or more. While the examples in FIGs. 5A-5C and Tables 1 and 2 illustrate the example of network coding for two or four UEs, the encoding device may retransmit packets for a large number of UEs, such as hundreds of UEs. As an example, an encoding device with 250 UEs in a communication system may target network coded packets to a subset of the UEs, e.g., to 120 UEs or less. Receiving feedback from each UE for every packet in a combination may involve p to 120*4 = 480 resources, in such an example. The number of resources for feedback from each of the UEs may be more than is available in a slot. The feedback resources, e.g., for large feedback collection packets for the purpose of bootstrapping, may exceed the available feedback resources in the slot. Bootstrapping may refer to soliciting feedback for the packets, for example.

Aspects presented herein provide a way for receiving UEs to provide feedback to an encoding device, such as a network encoder, which allows for feedback from large numbers of UEs even with limited feedback resources (e.g., PSFCH resources). As presented herein, the feedback for a network coding packet may be staggered across multiple slots, in order to enable increased numbers of receiving UEs to provide their feedback. The encoding device may configure the receiving UEs and/or indicate to the receiving UEs to use feedback staggering based on various metrics. FIG. 6 illustrates a time diagram 600 showing the transmission of a network coding transmission in a first slot 602. If feedback is sent without staggering, the feedback may be transmitted in feedback resources 605 of a second slot 604. FIG. 6 illustrates that the first slot 602 may include feedback resources 603, in which feedback may be received for transmissions in prior slots. With staggered feedback across multiple slots according to the claimed invention, one or more UEs send feedback in the feedback resources 607 of a third slot 606 and/or feedback resources 609 of a fourth slot 608. As an example, a baseline set of resources for feedback for the encoded transmission in the first slot 602 may be the feedback resources 605 in the following slot (e.g., the second slot 604) As illustrated in FIG. 6 according to the claimed invention , each slot includes PSFCH resources, e.g., as described in connection with FIG. 4. The PSFCH resources in a slot may include one or more symbols of resources.

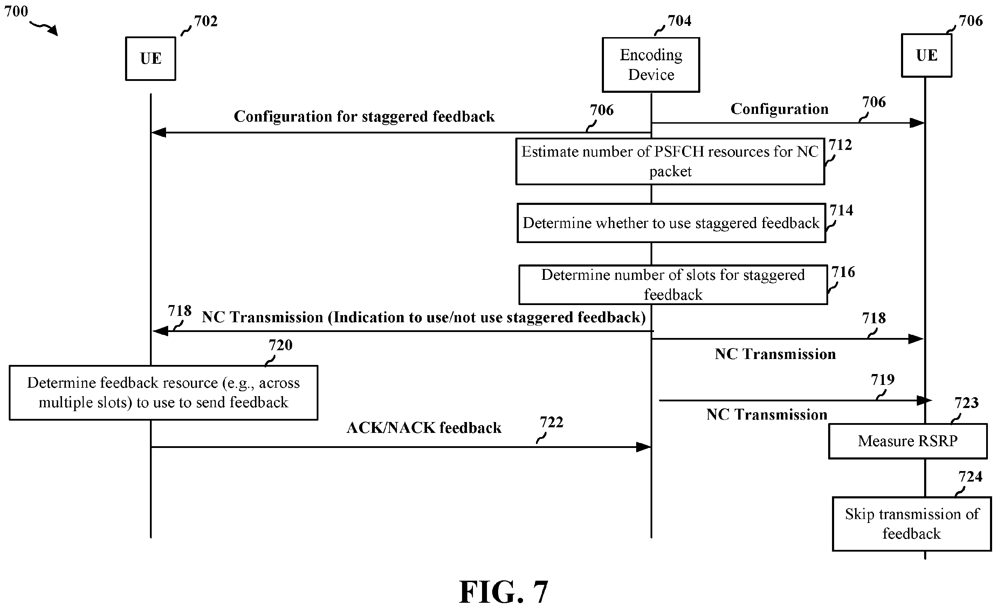

FIG. 7 illustrates a communication flow 700 between an encoding device 704 and one or more UEs, e.g., UE 702 and UE 706 that includes staggered feedback according to the claimed invention.

When the encoding device 704 is going to send a network coding packet, the encoding device 704 may estimate the number of needed PSFCH resources for the network coding packet transmission, at 712. A network coding packet may include multiple TBs, whereas the initial packet transmission may include a single TB, e.g., as described in connection with FIG. 5B. If the transmission is a network coding packet form from an existing feedback state, a single ACK/NACK per receiving UE may be used to update the ACK/NACK state for each coded packet. Alternatively, if the transmission is a feedback collection packet, the feedback may include one ACK/NACK per UE for each coded packet.

In some aspects, the encoding device 704 may determine whether to use staggered feedback for a network coding packet, e.g., at 714. As an example, the encoding device 704 may use staggered feedback if the amount of PSFCH resources for the network coding transmission is more than a threshold amount of resources. The amount of resources for the feedback, e.g., as estimated at 712, may be based on a number of UEs to provide feedback and/or a number of TBs included in the network coding packet. The threshold may be a fixed threshold in some aspects. In other aspects, the threshold may be a configurable threshold. In some aspects, the threshold may be related to an amount of PSFCH resources that are available to the encoding device in the upcoming PSFCH occasion. For example, the amount of available PSFCH resources for the encoding device may exclude PSFCH resources used for normal (e.g., non-network coding) communication, PSFCH resources used by other encoding devices, and/or PSFCH resources already used for other network coding packets from the same encoding device.

The encoding device 704 may further determine a number of slots for the staggered feedback, e.g., at 716. The amount of staggered PSFCH slots for the feedback may be based on the amount of PSFCH for the network coding transmission and/or the delay budgets of the coded packets in the network coding transmission. In an example, the encoding device 704 may consider the minimum of the delay budgets of the coded packets in a network coding transmission.

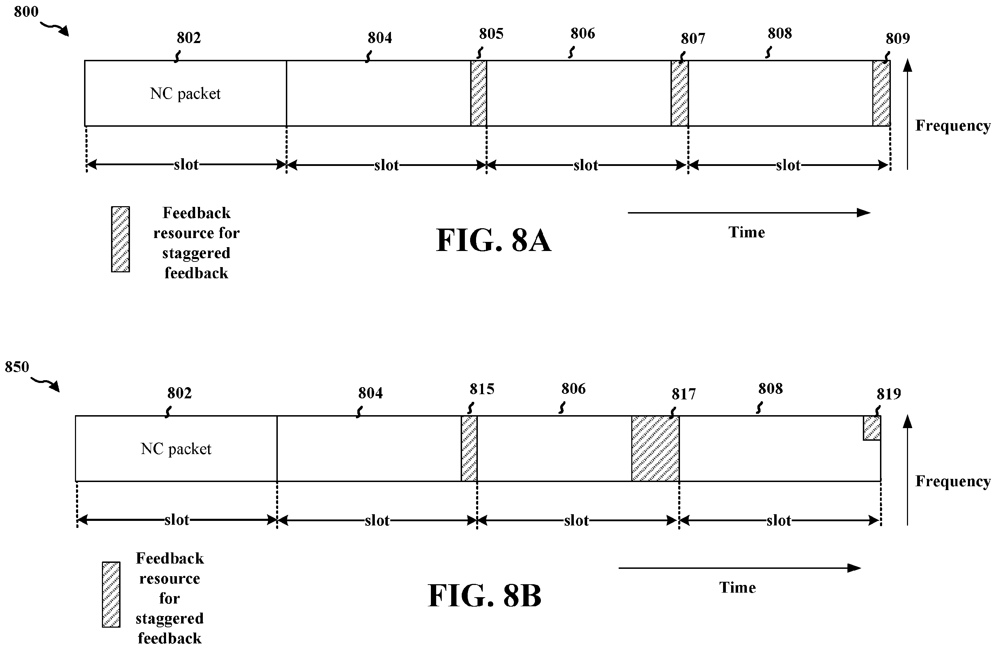

In some aspects, the number of PSFCH resources allocated for the network coding packet can be the same across the multiple (e.g., staggered) PFSCH slots. FIG. 8A illustrates an example 800 in which the feedback resources (e.g., 805, 807, 809) for staggered feedback for a network coding packet in slot 802 are the same across multiple slots (e.g., 804 806, and 808). In other aspects, the number of PSFCH resources allocated for the network coding packet may be different across the multiple (e.g., staggered) PSFCH slots. FIG. 8B illustrates an example 850 in which the feedback resources (e.g., 815, 817, 819) for staggered feedback for a network coding packet in slot 802 may be different (e.g., in time and/or frequency) across multiple slots (e.g., 804 806, and 808). As an example, the feedback resources 817 in slot 806 are shown as being different in a time domain. For example, in slot 804, the feedback resources may span a single symbol, and in slot 806, the feedback resources may span multiple symbols. As another example, the feedback resources 819 are shown as being different in frequency.

The amount of available feedback resources in a slot may be limited, e.g., a few symbols of a slot. By staggering feedback for network coding packets over multiple slots, more feedback resources may be used for a larger network coding packet (e.g., with multiple TBs and/or a larger number of UEs to provide feedback), and a smaller network coding packet (e.g., with fewer packets and/or a smaller number of UEs to provide feedback) may have feedback provided in a single slot, e.g., without feedback staggering across multiple slots.

When the encoding device 704 decides to use feedback staggering, at 714, the encoding device indicates to a receiving UE to use the staggered feedback. The indication may be included in the network coding transmission 718. In some aspects, the staggering may be based on previously configured parameters, and the encoding device and the UE(s) may determine to use staggered feedback, e.g., based on a number of packets in the network coding transmission, etc.

A receiving UE 702 may determine which PSFCH resource on which PSFCH slot to use to send the feedback. If the indication indicates to use non-staggered feedback, the UE 702 may transmit the feedback in a following slot, e.g., as described in connection with FIG. 6. If the indication indicates to use staggered feedback, the UE determines , at 720, which of multiple slots to use for sending feedback 722. For a non-network coding transmission, a PSFCH resource may be based on a codeword, e.g., with a single resource in a single slot corresponding to a particular codeword. For staggered feedback across multiple slots, the receiving UEs may determine their corresponding PSFCH resource in a different manner. In some aspects, the receiving UE(s) (e.g., UE 702) may determine the PSFCH resource, at 720, based on UE ID and/or a packet ID. In an example, each of the receiving UEs may perform a hash on their UE ID and a packet ID for the network coding packet to determine a PSFCH resource. In some aspects, the number of staggered slots (e.g., of the multiple slots for the PSFCH) may be configured at 710, e.g., prior to the network coding transmission. In some aspects, the number of staggered slots (e.g., of the multiple slots for the PSFCH) may be signaled by the encoding device.

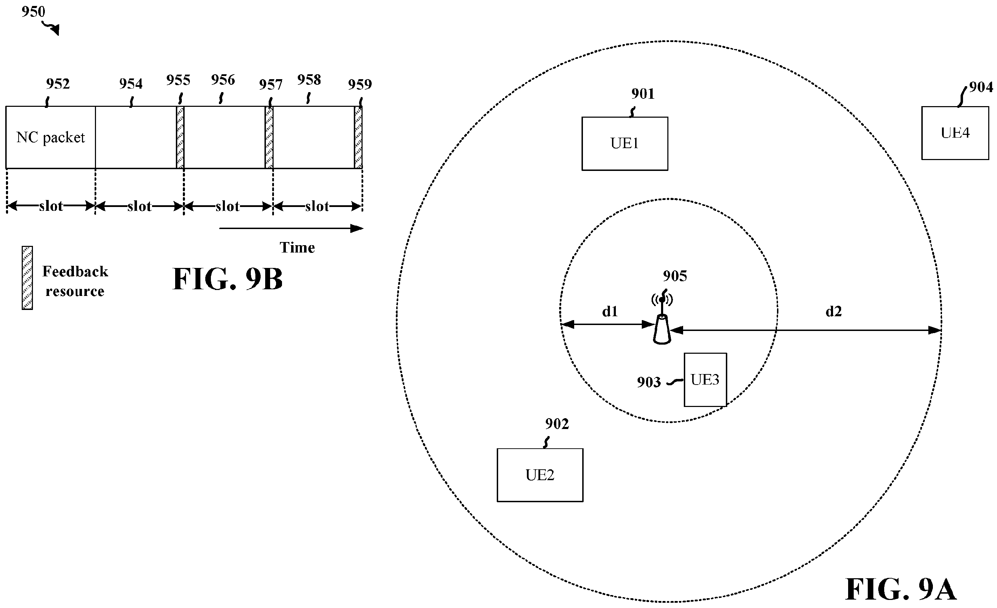

In some aspects, a receiving UE 702 may determine the slot in which to send feedback 722 based on the receiving UE's, at 702, distance to the encoding device. As an example, the UEs may be grouped for feedback purposes according to their respective distances from the encoding device. The encoding device may receive feedback from UEs having similar distances in a same slot, for example. FIG. 9A illustrates an example in which receiving UEs at a distance of larger than d2 (e.g., UE4 904) may transmit feedback for a network coding packet in slot 952 in a particular slot (e.g., in feedback resources 955 of slot 954), receiving UEs (e.g., UE1 901 and UE2 902) between a distance of d1 and d2 may transmit feedback for the network coding packet in slot 952 in a particular slot (e.g., in feedback resource 957 of slot 956), and receiving UEs (e.g., UE3 903) within a distance d1 may transmit feedback for the network coding packet in slot 952 in a particular slot (e.g., feedback resource 959 of slot 958). FIG. 9B illustrates an example resource diagram 950 showing the feedback resources for the network coding packet transmission. In some aspects, the distance interval(s), range(s), or threshold(s) corresponding to different slots may be configured, e.g., prior to the network coding transmission. In some aspects, the distance interval(s), range(s), or threshold(s) corresponding to different slots may be signaled or indicated to the receiving UEs by the encoding device.

The UEs that are closer to the encoding device may have a better chance of decoding the packets. The UEs that are closer to the encoding device may send feedback at a later slot than UEs that are more distant from the encoding device and less likely to successfully decode a transmission.

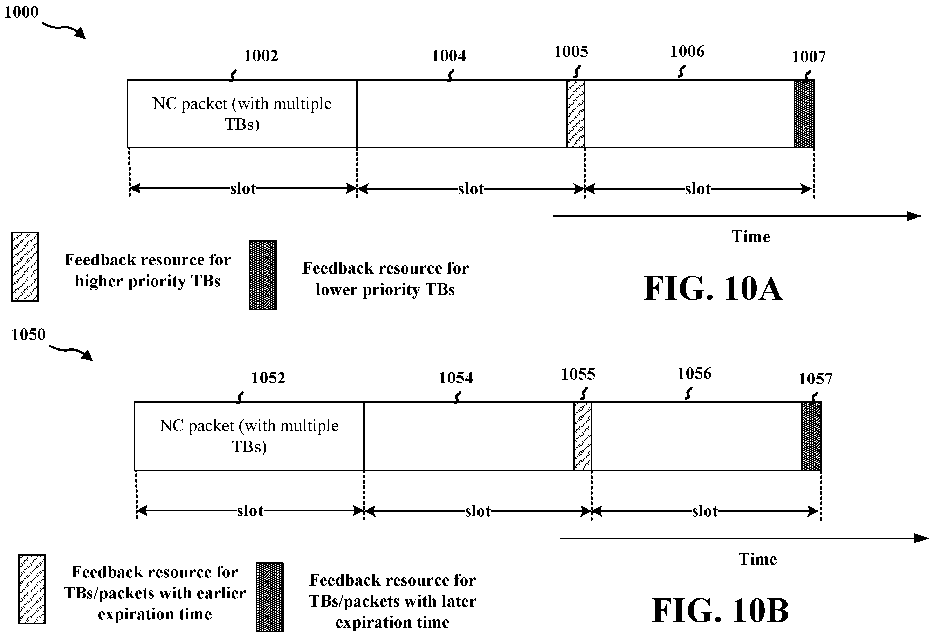

In some aspects, a receiving UE may determine the slot in which to send feedback 722 based on a packet priority. If the packet, or TB, that a UE is attempting to decode has a higher priority, the UE may send feedback in an earlier slot than for feedback for lower priority packets. FIG. 10A illustrates an example 1000 of a network coding packet transmission that includes multiple TBs (e.g., multiple non-network coding packets or multiple initial packets) in a first slot 1002. Feedback resource 1005 in slot 1004 may correspond to higher priority TBs/packets in the network coding packet, and feedback resource 1007 in slot 1006 may correspond to lower priority TBs/packets in the network coding packet.

In some aspects, a receiving UE may determine the slot in which to send feedback 722 based on a packet expiration time or a relative expiration time order. A UE may send feedback in an earlier slot for a packet having an earlier packet expiration time than for a packet have a later expiration time. FIG. 10B illustrates an example 1050 of a network coding packet transmission that includes multiple TBs (e.g., multiple non-network coding packets or multiple initial packets) in a first slot 1052. Feedback resource 1055 in slot 1054 may correspond to TBs/packets in the network coding packet that have an earlier expiration time, and feedback resource 1057 in slot 1056 may correspond to TBs/packets in the network coding packet that have a later expiration time.

The packet priority or relative expiration time order for different packets in a network coding transmission may be signaled in the network coding packet header. The mapping from a packet's order (x) to the number of slots (y) at which the feedback is to be staggered can be configured, e.g., at 706, or may be signaled by the encoding device, e.g., at 718. In some aspects, a mapping in the signaling can include all the input-output pairs (x, y). In some aspects, the signaling, for all the input-output pairs (x, y) associated with a certain output Y, may include the mapping one with the lowest x. If the mapping is similar, the signaling may indicate, or include, the turning points, e.g., particular input-output pairs having a different mapping or at which the mapping changes.

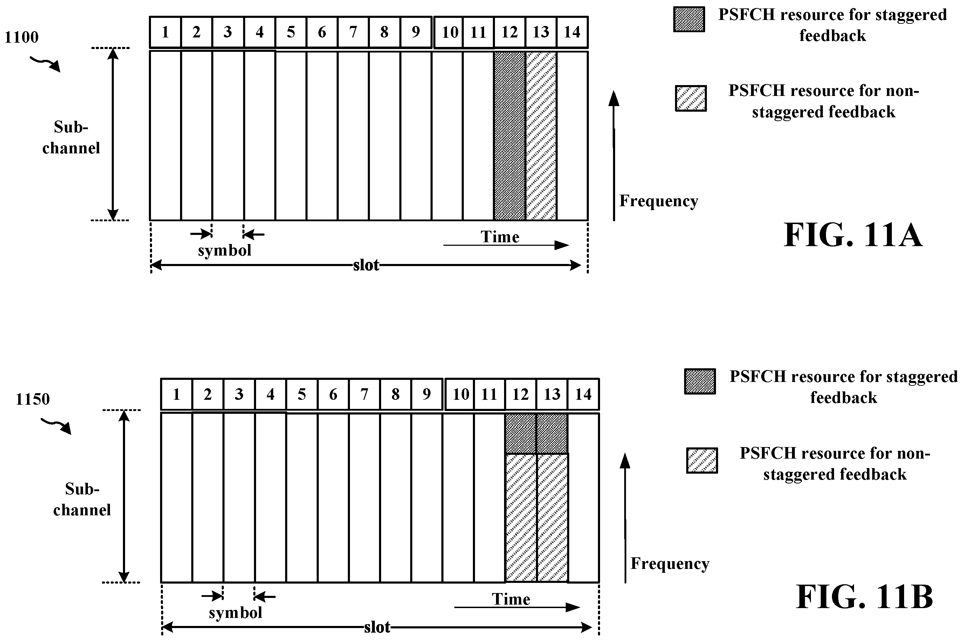

As other transmissions may not be network coding transmissions, the other transmissions may involve fewer feedback resources. In some aspects, in order to avoid using feedback resources of other transmissions for the staggered feedback for the network coding transmission, the PSFCH resources may be divided between resources for staggered feedback and resources for other transmissions. FIGs. 11A and 11B illustrate examples 1100 and 1150 illustrating that the resources may be divided in time and/or frequency. In other aspects, even without divided, or designated resources, the feedback resources for other transmissions in a PFSCH symbol may be small, and the chance of collisions with staggered feedback may be small.

In some aspects, a subset of one or more UEs may be disabled from sending feedback for a network coding transmission, e.g., to save the PSFCH resources. Additionally, or alternatively, feedback for a part of the TBs included in a network coding transmission may be cancelled or muted. Muted feedback may refer to feedback that is canceled or skipped. As an example, UEs within a particular distance (D) of the encoding device may be muted from, or indicated to skip, sending feedback for a network coding transmission. For example, in FIG. 9A, the distance may correspond to d1, and UE3 903 may skip sending feedback based on its location relative to the encoding device 905. FIG. 7 illustrates that the UE 706 may skip sending feedback, at 724. The feedback from UEs within a closer distance of the encoding device may be more likely to successfully receive the network coding transmission, and the feedback may be less informative to the encoding device. By muting the feedback from the closer UEs, the encoding device may avoid using feedback resources that may be more likely to be ACKs. NACKs may be more important for the encoding device in selecting packets for a network coding transmission, and muting feedback from the closer UEs may allow for the encoding device to receive feedback from the UEs more likely to respond with a NACK in a more efficient manner. As well, muting feedback may help to avoid overpowering feedback from devices too far away due to near-far effect. As an example, feedback from a UE that is closer to an encoding device may be received with a stronger signal power than for feedback from devices that are more distant from the encoding device. The stronger received power may leak interference to other parts of the channel. The feedback from another UE that is more distant from the encoding device will be received with a weaker power. As such, leakage from the closer UE may interfere with feedback from the more distant UE. By muting the closer UE, the encoding device may improve the accuracy of the reception of feedback from more distant UEs.

In some aspects, the distance D may be configured, e.g., prior to the network coding transmission. In some aspects, the distance D may be signaled, or otherwise, indicated by the encoding device.

In some aspects, the feedback from closer UEs may be muted based on an RSRP threshold instead of a distance threshold. For example, UEs that measure an RSRP above the RSRP threshold may be indicated to skip transmitting feedback. The RSRP may be measured, e.g., for the network coding transmission. FIG. 7 illustrates that the UE 706 may measure an RSRP, at 723, and may skip transmission of feedback for the network coding transmission 718, at 724, based on the measured RSRP exceeding a threshold. This may reduce feedback from UEs that are closer to the encoding device and allow for more efficient feedback from UEs that are at a greater distance from the encoding device (e.g., and will likely measure a lower RSRP for the network coding transmission).

In some aspects, receiving UEs may cancel unsent feedback after a new network coding packet (e.g., 719) is received. As an example, some feedback may be staggered, e.g., scheduled, at a later slot based on a longer expiration time, lower priority, closer distance to the encoding device, etc. Such feedback may not yet be transmitted when the receiving UE 706 receives a subsequent network coding packet 719. The reception of the subsequent network coding transmission may trigger the receiving UE to cancel or drop the unsent ACK/NACK feedback, at 724) for the prior network coding transmission (e.g., 718).

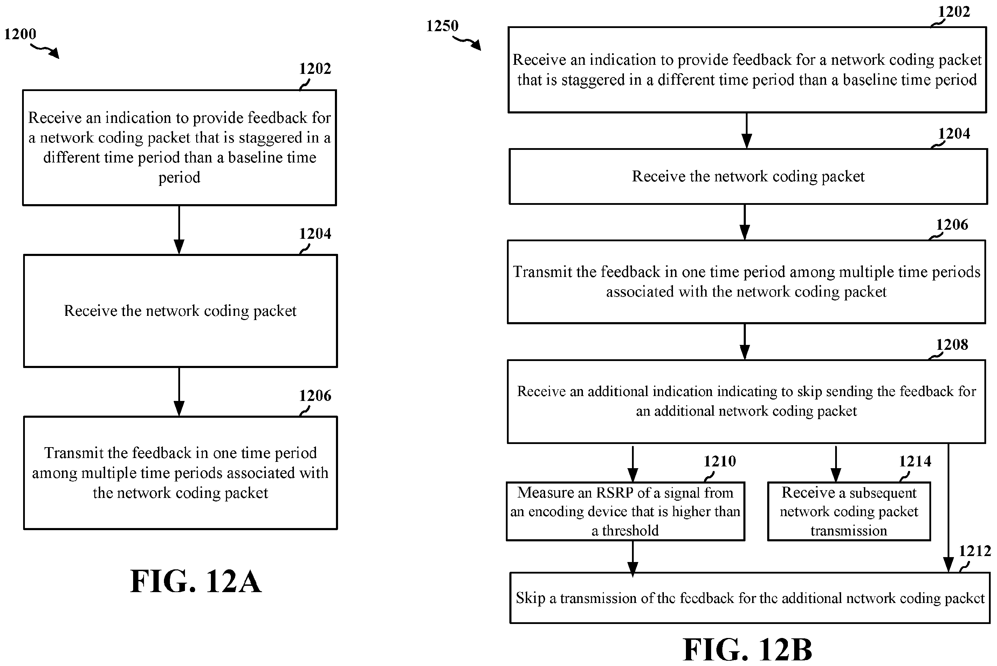

FIG. 12A is a flowchart 1200 of a method of wireless communication according to the claimed invention. The method may be performed by a UE (e.g., the UE 104; the device 350; the apparatus 1302). The method may enable the UE to send feedback for a network coding transmission in a staggered manner with other receiving UEs. The staggered transmission of feedback may enable more UEs to provide feedback to an encoding device, and/or may enable the feedback from the UE to be received more accurately by the encoding device. The improved feedback may enable the encoding device to improve selection of packets for future network coding transmissions, which may improve the likelihood of the UE to successfully receive one or more packets.

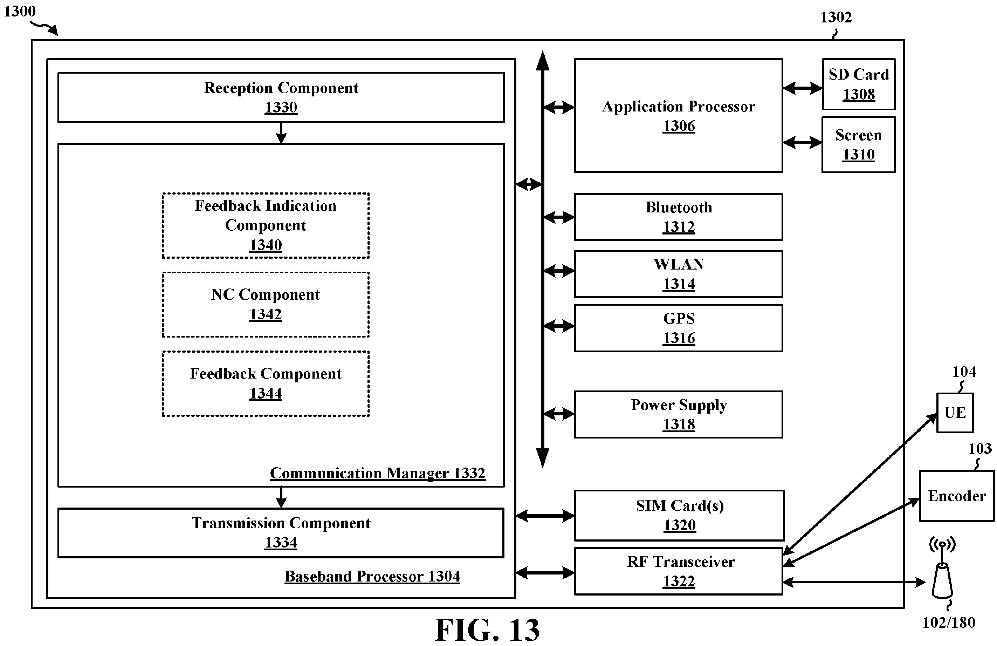

At 1202, the UE receives an indication to provide feedback for a network coding packet that is staggered in a different time period than a baseline time period. In some aspects, the indication may be comprised in a header of the network coding packet. In some aspects, the indication may be comprised in a configuration for the UE. The reception of the indication may be performed, e.g., by the feedback indication component 1340 of the apparatus 1302 in FIG. 13. FIG. 7 illustrates various examples of a UE 702 and/or 706 receiving indications to provide staggered feedback.

At 1204, the UE receives the network coding packet. The network coding packet may include a combination of multiple TBs (e.g., multiple packets that may have been previously transmitted), e.g., as described in connection with FIG. 5A and 5B. The reception of the network coping packet may be performed, e.g., by the NC component 1342 of the apparatus 1302 in FIG. 13. FIG. 7 illustrates an example of a UE receiving a network coding transmission. Example aspects of network coding transmissions are also described in connection with FIGs. 5A-5C.

At 1206, the UE transmits the feedback in one time period among multiple time periods associated with the network coding packet. The multiple time periods may correspond to multiple PSFCH slots., e.g., as described in connection with FIG. 6. The transmission of the feedback may be performed, e.g., by the feedback component 1344 of the apparatus 1302 in FIG. 13. Example aspects of feedback are described in connection with FIGs. 6-11B. The one time period may be more than one PSFCH slot after the network coding packet. A number of the multiple PSFCH slots may be based on a number of coded transport blocks (TBs) in the network coding packet. A number of the multiple PSFCH slots may be based on a delay budget of packets comprised in the network coding packet. In some aspects, the one time period may be based on a UE ID and a packet ID for the network coding packet. In some aspects, the one time period may be based on a corresponding distance from an encoding device. In some aspects, the one time period may be based on a packet priority associated with the feedback. In some aspects, the one time period may be based on a packet expiration time associated with the feedback.

FIG. 12B illustrates a method 1250 of wireless communication that may include 1202, 1204, and 1206 from FIG. 12A. As illustrated in FIG. 12B, in some aspects, at 1208, the UE may receive an additional indication indicating to skip sending the feedback for an additional network coding packet. The reception may be performed, e.g., by the feedback indication component 1340 of the apparatus 1302 in FIG. 13. The additional indication may be based on the UE being within a distance of an encoding device, an RSRP measured for the network coding packet, and/or reception of a subsequent network coding packet. As illustrated at 1210, in some aspects, the UE may measure an RSRP of a signal from an encoding device that is higher than a threshold, and at 1212 may skip a transmission of the feedback for the additional network coding packet. In some aspects, as illustrated at 1214, the UE may receive a subsequent network coding packet transmission, and at 1212 may skip transmission of the feedback in response to the reception of the subsequent network coding packet transmission. In some aspects, as illustrated at 1212, the UE may skip transmission of the feedback based on the UE being within a threshold distance of the encoding device. The skipping of the feedback may be performed, e.g., by the feedback component 1344 of the apparatus 1302 in FIG. 13. An example of a UE 706 skipping transmission of feedback is described in connection with FIG. 7.

FIG. 13 is a diagram 1300 illustrating an example of a hardware implementation for an apparatus 1302. The apparatus 1302 may be a UE, a component of a UE, or may implement UE functionality. In some aspects, the apparatus 1302 may include a baseband processor 1304 (also referred to as a modem) coupled to a RF transceiver 1322. In some aspects, the RF transceiver may be a cellular RF transceiver and the baseband processor may be a cellular baseband processor. In some aspects, the apparatus 1302 may further include one or more subscriber identity modules (SIM) cards 1320, an application processor 1306 coupled to a secure digital (SD) card 1308 and a screen 1310, a Bluetooth module 1312, a wireless local area network (WLAN) module 1314, a Global Positioning System (GPS) module 1316, or a power supply 1318. The baseband processor 1304 communicates through the RF transceiver 1322 with the UE 104 and/or the base station 102/180. The baseband processor 1304 may include a computer-readable medium / memory. The computer-readable medium / memory may be non-transitory. The baseband processor 1304 is responsible for general processing, including the execution of software stored on the computer-readable medium / memory. The software, when executed by the baseband processor 1304, causes the baseband processor 1304 to perform the various functions described *supra.* The computer-readable medium / memory may also be used for storing data that is manipulated by the baseband processor 1304 when executing software. The baseband processor 1304 further includes a reception component 1330, a communication manager 1332, and a transmission component 1334. The communication manager 1332 includes the one or more illustrated components. The components within the communication manager 1332 may be stored in the computer-readable medium / memory and/or configured as hardware within the baseband processor 1304. The baseband processor 1304 may be a component of the device 350 and may include the memory 360 and/or at least one of the TX processor 368, the RX processor 356, and the controller/processor 359. In one configuration, the apparatus 1302 may be a modem chip and include just the baseband processor 1304, and in another configuration, the apparatus 1302 may be the entire UE (e.g., see 350 of FIG. 3) and include the additional modules of the apparatus 1302.

The communication manager 1332 includes a feedback indication component 1340 that is configured to receive an indication to provide feedback for a network coding packet that is staggered in a different time period than another UE, e.g., as described in connection with 1202 in FIG. 12A and 12B. The communication manager 1332 further includes an NC component 1342 that receives network coding packets, e.g., as described in connection with 1204 in FIG. 12A and 12B The communication manager 1332 further includes a feedback component 1344 that is configured to transmit the feedback in one time period of multiple time periods associated with the network coding packet, e.g., as described in connection with 1206 in FIG. 12A or 12B. The feedback component 1344 may be further configured to skip transmission of the feedback, e.g., as described in connection with any of 1208-1218.

The apparatus may include additional components that perform each of the blocks of the algorithm in the flowcharts of FIGs. 12A, 12B and/or the aspects performed by the UEs in FIG. 7. As such, each block in the flowcharts of FIGs. 12A, 12B and/or the aspects performed by the UEs in FIG. 7 may be performed by a component and the apparatus may include one or more of those components. The components may be one or more hardware components specifically configured to carry out the stated processes/algorithm, implemented by a processor configured to perform the stated processes/algorithm, stored within a computer-readable medium for implementation by a processor, or some combination thereof.

As shown, the apparatus 1302 may include a variety of components configured for various functions. In one configuration, the apparatus 1302, and in particular the baseband processor 1304, includes means for receiving an indication to provide feedback for a network coding packet that is staggered in a different time period than a baseline time period; means for receiving the network coding packet; and means for transmitting the feedback in one time period among multiple time periods associated with the network coding packet. The apparatus 1302 may further include means for receiving an additional indication indicating to skip sending the feedback for an additional network coding packet. The apparatus 1302 may further include means for measuring a reference signal received power of a signal from an encoding device that is higher than a threshold; and means for skipping a transmission of the feedback for the additional network coding packet. The means may be one or more of the components of the apparatus 1302 configured to perform the functions recited by the means. As described *supra,* the apparatus 1302 may include the TX Processor 368, the RX Processor 356, and the controller/processor 359. As such, in one configuration, the means may be the TX Processor 368, the RX Processor 356, and the controller/processor 359 configured to perform the functions recited by the means.

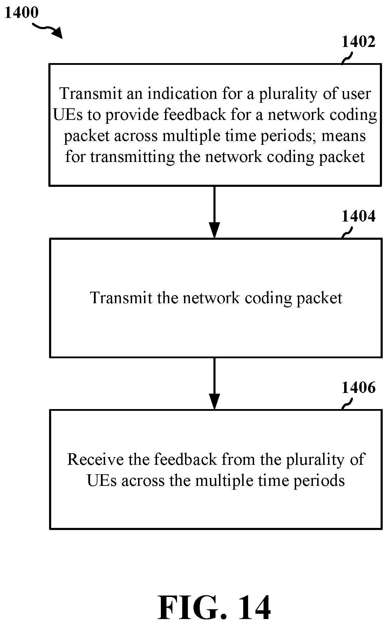

FIG. 14 is a flowchart 1400 of a method of wireless communication according to the claimed invention. The method may be performed by an encoder (e.g., the encoding device 103, 505; the device 310; the apparatus 1502). In some aspects, the encoding device may be a UE (e.g., UE 104). In some aspects, the encoding device may be a base station 102 or 180. In some aspects, the encoding device may be an RSU (e.g., RSU 107). In some aspects, the encoding device may be an IAB node (e.g., IAB node 111). The method may enable the encoding device to receive feedback for a network coding transmission in a staggered manner with across multiple slots. The staggered transmission of feedback may enable the encoding device to receive feedback from a larger number of UEs and/or may receive the feedback from larger numbers of UEs more accurately. The improved feedback may enable the encoding device to improve selection of packets for future network coding transmissions. The method may enable the encoding device to trigger request staggered feedback or non-staggered feedback, e.g., in order to improve the efficient use of feedback resources based on one or more parameters, such as a size of a network coding packet and/or an amount of receiving UEs from which feedback is anticipated.

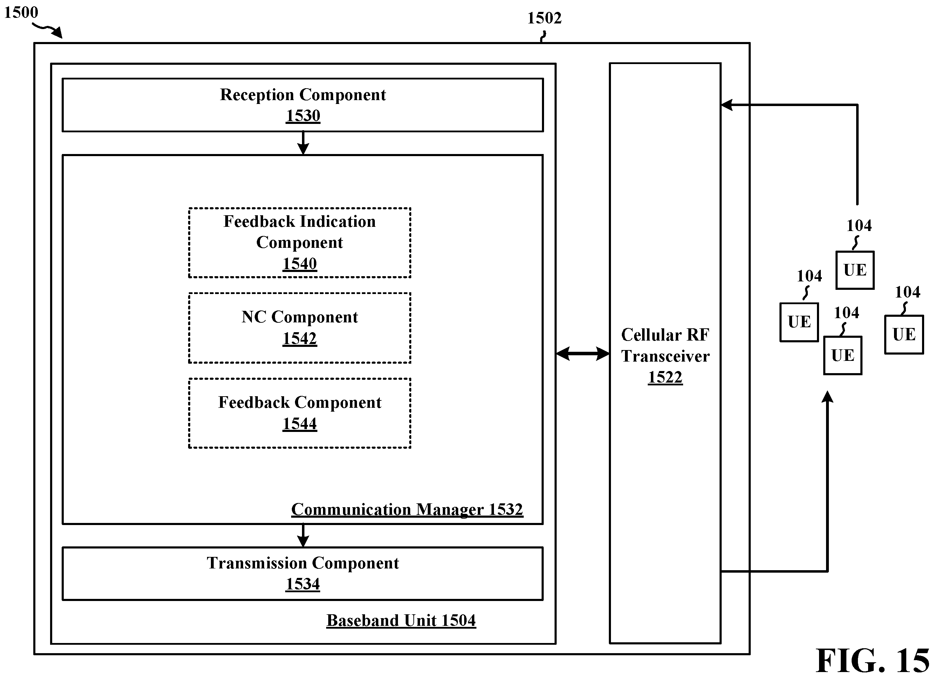

At 1402 the encoder transmits an indication for a plurality of UEs to provide feedback for a network coding packet across multiple time periods. In some aspects, the indication may be comprised in a header of the network coding packet. In some aspects, the indication may be comprised in a configuration for the UE(s). The transmission of the indication may be performed, e.g., by the feedback indication component 1540 of the apparatus 1502 in FIG. 15. FIG. 7 illustrates various examples of an encoding device providing an indication for a receiving device to provide staggered feedback. In some aspects, the encoder transmit may the indication for the plurality of UEs to provide the feedback across the multiple PSFCH slots in response to an amount of feedback resources for the network coding packet being larger than a threshold. In some aspects, the encoder may allocate a different number of physical sidelink feedback channel resources for the network coding packet across the multiple PSFCH slots. In some aspects, the encoder may allocate a same number of physical sidelink feedback channel resources for the network coding packet across the multiple PSFCH slots. The indication may be comprised in a header of the network coding packet. The indication may be comprised in a configuration for the plurality of UEs.

At 1404, the encoder transmits the network coding packet. The network coding packet may include a combination of multiple TBs (e.g., multiple packets that may have been previously transmitted), e.g., as described in connection with FIG. 5A and 5B. The transmission of the network coping packet may be performed, e.g., by the NC component 1542 of the apparatus 1502 in FIG. 15. FIG. 7 illustrates an example of an encoding device transmitting a network coding transmission. Example aspects of network coding transmissions are also described in connection with FIGs. 5A-5C.

At 1406, the encoder receives the feedback from the plurality of UEs across the multiple time periods. The multiple time periods may correspond to multiple PSFCH slots., e.g., as described in connection with FIG. 6. The reception of the feedback may be performed, e.g., by the feedback component 1544 of the apparatus 1502 in FIG. 15. Example aspects of feedback are described in connection with FIGs. 6-11B. The multiple time periods may correspond to multiple PSFCH slots. A number of the multiple PSFCH slots may be based on a number of UEs. A number of the multiple PSFCH slots may be based on a number of coded TBs in the network coding packet. A number of the multiple PSFCH slots may be based on a delay budget of packets comprised in the network coding packet. The reception of the feedback from the plurality of UEs across the multiple time periods may include reception of the feedback for each UE in a time period based on a corresponding UE identifier (ID) and a packet ID for the network coding packet. The reception of the feedback from the plurality of UEs across the multiple time periods may include reception of the feedback for each UE in a time period based on a corresponding distance from the encoding device. The reception of the feedback from the plurality of UEs across the multiple time periods may include reception of the feedback for each UE in a time period based on a packet priority associated with a corresponding feedback. The reception of the feedback from the plurality of UEs across the multiple time periods may include reception of the feedback for each UE in a time period based on a packet expiration time associated with a corresponding feedback.

In some aspects, the encoder may indicate for one or more UEs to skip sending the feedback for the network coding packet. The one or more UEs may be within a distance of the encoding device or measure a reference signal received power of a signal from the encoding device that is higher than a threshold.

FIG. 15 is a diagram 1500 illustrating an example of a hardware implementation for an apparatus 1502. The apparatus 1502 may be a base station, a component of a base station, or may implement base station functionality. In some aspects, the apparatus 1302 may include a baseband unit 1504. The baseband unit 1504 may communicate through a RF transceiver 1522 with the UE 104. The baseband unit 1504 may include a computer-readable medium / memory. The baseband unit 1504 is responsible for general processing, including the execution of software stored on the computer-readable medium / memory. The software, when executed by the baseband unit 1504, causes the baseband unit 1504 to perform the various functions described *supra.* The computer-readable medium / memory may also be used for storing data that is manipulated by the baseband unit 1504 when executing software. The baseband unit 1504 further includes a reception component 1530, a communication manager 1532, and a transmission component 1534. The communication manager 1532 includes the one or more illustrated components. The components within the communication manager 1532 may be stored in the computer-readable medium / memory and/or configured as hardware within the baseband unit 1504. The baseband unit 1504 may be a component of the device 310 and may include the memory 376 and/or at least one of the TX processor 316, the RX processor 370, and the controller/processor 375.

The communication manager 1532 includes a feedback indication component 1540 that is configured to transmit an indication for a plurality of user UEs to provide feedback for a network coding packet across multiple time periods, e.g., as described in connection with 1402 in FIG. 14. The communication manager 1532 further includes an NC component 1542 that transmits network coding packets, e.g., as described in connection with 1404 in FIG. 14. The communication manager 1532 further includes a feedback component 1544 that is configured to receive the feedback from the plurality of UEs across the multiple time periods, e.g., as described in connection with 1406 in FIG. 14. The feedback component 1544 may be further configured to indicate for one or more UEs to skip transmission of the feedback

The apparatus may include additional components that perform each of the blocks of the algorithm in the flowchart of FIG. 14, and/or the aspects performed by the encoding device in FIG. 7. As such, each block in the flowchart of FIG. 14 and/or the aspects performed by the encoding device in FIG. 7 may be performed by a component and the apparatus may include one or more of those components. The components may be one or more hardware components specifically configured to carry out the stated processes/algorithm, implemented by a processor configured to perform the stated processes/algorithm, stored within a computer-readable medium for implementation by a processor, or some combination thereof.

As shown, the apparatus 1502 may include a variety of components configured for various functions. In one configuration, the apparatus 1502, and in particular the baseband unit 1504, includes means for transmitting an indication for a plurality of user UEs to provide feedback for a network coding packet across multiple time periods; means for transmitting the network coding packet; and means for receiving the feedback from the plurality of UEs across the multiple time periods. The apparatus 1502 may further include means for transmitting the indication for the plurality of UEs to provide the feedback across the multiple PSFCH slots in response to an amount of feedback resources for the network coding packet being larger than a threshold. The apparatus 1502 may further include means for allocating a different number of physical sidelink feedback channel resources for the network coding packet across the multiple PSFCH slots. The apparatus 1502 may further include means for allocating a same number of physical sidelink feedback channel resources for the network coding packet across the multiple PSFCH slots. The apparatus 1502 may further include means for receiving the feedback for each UE in a time period based on a corresponding UE ID and a packet ID for the network coding packet. The apparatus 1502 may further include means for receiving the feedback for each UE in a time period based on a corresponding distance from the encoding device. The apparatus 1502 may further include means for receiving the feedback for each UE in a time period based on a packet priority associated with a corresponding feedback. The apparatus 1502 may further include means for receiving the feedback for each UE in a time period based on a packet expiration time associated with a corresponding feedback. The apparatus 1502 may further include means for indicating for one or more UEs to skip sending the feedback for the network coding packet. The means may be one or more of the components of the apparatus 1502 configured to perform the functions recited by the means. As described supra, the apparatus 1502 may include the TX Processor 316, the RX Processor 370, and the controller/processor 375. As such, in one configuration, the means may be the TX Processor 316, the RX Processor 370, and the controller/processor 375 configured to perform the functions recited by the means.

It is understood that the specific order or hierarchy of blocks in the processes / flowcharts disclosed is an illustration of example approaches. Based upon design preferences, it is understood that the specific order or hierarchy of blocks in the processes / flowcharts may be rearranged. Further, some blocks may be combined or omitted. The accompanying method claims present elements of the various blocks in a sample order, and are not meant to be limited to the specific order or hierarchy presented.

The previous description is provided to enable any person skilled in the art to practice the various aspects described herein. Various modifications to these aspects will be readily apparent to those skilled in the art, and the generic principles defined herein may be applied to other aspects. Thus, the claims are not intended to be limited to the aspects shown herein, but is to be accorded the full scope consistent with the language claims, wherein reference to an element in the singular is not intended to mean "one and only one" unless specifically so stated, but rather "one or more." Terms such as "if," "when," and "while" should be interpreted to mean "under the condition that" rather than imply an immediate temporal relationship or reaction. That is, these phrases, e.g., "when," do not imply an immediate action in response to or during the occurrence of an action, but simply imply that if a condition is met then an action will occur, but without requiring a specific or immediate time constraint for the action to occur. The word "exemplary" is used herein to mean "serving as an example, instance, or illustration." Any aspect described herein as "exemplary" is not necessarily to be construed as preferred or advantageous over other aspects. Unless specifically stated otherwise, the term "some" refers to one or more. Combinations such as "at least one of A, B, or C," "one or more of A, B, or C," "at least one of A, B, and C," "one or more of A, B, and C," and "A, B, C, or any combination thereof" include any combination of A, B, and/or C, and may include multiples of A, multiples of B, or multiples of C. Specifically, combinations such as "at least one of A, B, or C," "one or more of A, B, or C," "at least one of A, B, and C," "one or more of A, B, and C," and "A, B, C, or any combination thereof" may be A only, B only, C only, A and B, A and C, B and C, or A and B and C, where any such combinations may contain one or more member or members of A, B, or C. The words "module," "mechanism," "element," "device," and the like may not be a substitute for the word "means." As such, no claim element is to be construed as a means plus function unless the element is expressly recited using the phrase "means for."

## Claims

1. An apparatus for wireless communication at a user equipment, UE, comprising:
memory; and
at least one processor coupled to the memory and configured to cause the UE to:
receive an indication to use staggered feedback for a network coding packet, wherein the network coding packet includes an encoded combination of multiple packets for reception by multiple UEs including the UE, and wherein the feedback from the UE for the network coding packet is staggered in a different time period than additional feedback for the network coding packet from one or more different UEs of the multiple UEs;
receive the network coding packet;
determine a single time period to send the feedback from the UE for the network coding packet among multiple feedback time periods for the network coding packet; and
transmit the feedback from the UE for the network coding packet in the single time period among the multiple feedback time periods for the network coding packet.

2. The apparatus of claim 1, further comprising:
at least one antenna coupled to the at least one processor, wherein the multiple feedback time periods for the network coding packet correspond to multiple physical sidelink feedback channel, PSFCH, slots, and wherein the single time period for the UE to provide the feedback from the UE for the network coding packet is more than one PSFCH slot after the network coding packet.

3. The apparatus of claim 2, wherein a number of the multiple PSFCH slots is based on a number of coded transport blocks, TBs, in the network coding packet.

4. The apparatus of claim 2, wherein a number of the multiple PSFCH slots is based on a delay budget of packets comprised in the network coding packet.

5. The apparatus of claim 1, wherein the indication is comprised in a header of the network coding packet.

6. The apparatus of claim 1, wherein the indication is comprised in a configuration for the UE.

7. The apparatus of claim 1, wherein the single time period is based on one of the following:
i) a UE identifier, ID, and a packet ID for the network coding packet;
ii) a corresponding distance from an encoding device;
iii) a packet priority associated with the feedback; or
iv) a packet expiration time associated with the feedback.

8. The apparatus of claim 1, wherein the at least one processor is further configured to cause the UE to:
receive an additional indication indicating to skip sending the feedback for an additional network coding packet.

9. The apparatus of claim 8, wherein:
i) the additional indication is based on the UE being within a distance of an encoding device; or
ii) wherein the at least one processor are further configured to cause the UE to:
measure a reference signal received power of a signal from an encoding device that is higher than a threshold; and
skip a transmission of the feedback for the additional network coding packet.

10. A method of wireless communication at a user equipment, UE, comprising:
receiving an indication to use staggered feedback for a network coding packet, wherein the network coding packet includes an encoded combination of multiple packets for reception by multiple UEs including the UE, and wherein the feedback from the UE for the network coding packet is staggered in a different time period than additional feedback for the network coding packet from one or more different UEs of the multiple UEs;
receiving the network coding packet;
determining a single time period to send the staggered feedback from the UE for the network coding packet among multiple feedback time periods for the network coding packet; and
transmitting the feedback from the UE for the network coding packet in the single time period among the multiple feedback time periods for the network coding packet.

11. An apparatus for wireless communication at an encoding device, comprising:
memory; and
at least one processor coupled to the memory and configured to cause the encoding device to:
transmit an indication for a plurality of user equipments, UEs, to use staggered feedback for a network coding packet across multiple feedback time periods associated with the network coding packet, wherein the network coding packet includes an encoded combination of multiple packets for reception by the plurality of UEs;
transmit the network coding packet; and
receive feedback from the plurality of UEs across the multiple feedback time periods, wherein the feedback for the network coding packet from different UEs of the plurality of UEs is staggered in different feedback time periods of the multiple feedback time periods.

12. The apparatus of claim 11, further comprising one of the following:
i) at least one antenna coupled to the at least one processor, wherein the multiple feedback time periods correspond to multiple physical sidelink feedback channel, PSFCH, slots, and the multiple feedback time period includes at least one time period that is multiple PSFCH slots after the network coding packet;
ii) wherein the indication is comprised in a header of the network coding packet;
iii) wherein the indication is comprised in a configuration for the plurality of UEs;
iv) wherein to receive the feedback from the plurality of UEs across the multiple feedback time periods, the at least one processor is further configured to cause the encoding device to:
receive the feedback for each UE in a time period based on a corresponding UE identifier, ID, and a packet ID for the network coding packet.
v) wherein to receive the feedback from the plurality of UEs across the multiple time periods, the at least one processor is further configured to
receive the feedback for each UE in a time period based on a corresponding distance from the encoding device;
vi) wherein to receive the feedback from the plurality of UEs across the multiple feedback time periods, the at least one processor is further configured to:
receive the feedback for each UE in a time period based on a packet priority associated with a corresponding feedback;
vii) wherein to receive the feedback from the plurality of UEs across the multiple feedback time periods, the at least one processor is further configured to:
receive the feedback for each UE in a time period based on a packet expiration time associated with a corresponding feedback;
viii) the at least one processor is further configured to cause the encoding device to:
indicate for one or more UEs to skip sending the feedback for the network coding packet.

13. The apparatus of claim 12, option i), further comprising one of the following:
i) wherein a number of the multiple PSFCH slots is based on at least one of a number of UEs or a number of coded transport blocks, TBs, in the network coding packet;
ii) wherein a number of the multiple PSFCH slots is based on a delay budget of packets comprised in the network coding packet;
iii) wherein to transmit the indication, the at least one processor is further configured to cause the encoding device to:
transmit the indication for the plurality of UEs to provide the staggered feedback across the multiple PSFCH slots in response to an amount of feedback resources for the network coding packet being larger than a threshold;
iv) wherein the at least one processor is further configured to cause the encoding device to:
allocate a different number of physical sidelink feedback channel resources for the network coding packet across the multiple PSFCH slots;
v) wherein the at least one processor is further configured to cause the encoding device to:
allocate a same number of physical sidelink feedback channel resources for the network coding packet across the multiple PSFCH slots.

14. The apparatus of claim 12, option viii), wherein the one or more UEs are within a distance of the encoding device or measure a reference signal received power of a signal from the encoding device that is higher than a threshold.

15. A method of wireless communication at an encoding device, comprising:
transmitting an indication for a plurality of user equipments, UEs, to use staggered feedback for a network coding packet across multiple time periods associated with the network coding packet, wherein the network coding packet includes an encoded combination of multiple packets for reception by the plurality of UEs;
transmitting the network coding packet; and
receiving feedback from the plurality of UEs across the multiple feedback time periods, wherein the feedback for the network coding packet from different UEs of the plurality of UEs is staggered in different feedback time periods of the multiple feedback time period.

## Patentansprüche

1. Eine Vorrichtung zur drahtlosen Kommunikation an einem Benutzergerät, UE, die Folgendes aufweist:
Speicher; und
mindestens einen Prozessor, der mit dem Speicher gekoppelt und darauf ausgelegt ist, das UE zu Folgendem zu veranlassen:
Empfangen einer Angabe, ein gestaffeltes Feedback für ein Netzwerkcodierungspaket zu verwenden, wobei das Netzwerkcodierungspaket eine codierte Kombination multipler Pakete zum Empfang durch multiple UEs einschließt, die das UE einschließen, und wobei das Feedback von dem UE für das Netzwerkcodierungspaket in einer anderen Zeitspanne als ein zusätzliches Feedback für das Netzwerkcodierungspaket von einem oder mehreren anderen UEs unter den multiplen UEs gestaffelt ist;
Empfangen des Netzwerkcodierungspakets;
Bestimmen einer einzigen Zeitspanne zum Senden des Feedback von dem UE für das Netzwerkcodierungspaket unter multiplen Feedback-Zeitspannen für das Netzwerkcodierungspaket; und
Übermitteln des Feedback von dem UE für das Netzwerkcodierungspaket in der einzigen Zeitspanne unter den multiplen Feedback-Zeitspannen für das Netzwerkcodierungspaket.

2. Vorrichtung nach Anspruch 1, die ferner Folgendes aufweist:
mindestens eine mit dem mindestens einen Prozessor gekoppelte Antenne, wobei die multiplen Feedback-Zeitspannen für das Netzwerkcodierungspaket multiplen physischen Sidelink-Feedback-Kanal-Slots, PSFCH-Slots, entsprechen, und wobei die einzige Zeitspanne zur Bereitstellung des Feedback von dem UE für das Netzwerkcodierungspaket durch das UE mehr als einen PSFCH-Slot nach dem Netzwerkcodierungspaket liegt.

3. Vorrichtung nach Anspruch 2, wobei eine Anzahl der multiplen PSFCH-Slots auf einer Anzahl codierter Transportblöcke, TBs, in dem Netzwerkcodierungspaket basiert.

4. Vorrichtung nach Anspruch 2, wobei eine Anzahl der multiplen PSFCH-Slots auf einem Verzögerungsbudget an Paketen basiert, die das Netzwerkcodierungspaket aufweist.

5. Vorrichtung nach Anspruch 1, wobei Kopfdaten des Netzwerkcodierungspakets die Angabe aufweisen.

6. Vorrichtung nach Anspruch 1, wobei eine Konfiguration für das UE die Angabe aufweist.

7. Vorrichtung nach Anspruch 1, wobei die einzige Zeitspanne auf einem unter Folgendem basiert:
i) einer UE-Identifikation, UE-ID, und einer Paket-ID für das Netzwerkcodierungspaket;
ii) einem entsprechenden Abstand von einem Codiergerät;
iii) einer dem Feedback zugeordneten Paketpriorität; oder
iv) einer dem Feedback zugeordneten Paketablaufzeit.

8. Vorrichtung nach Anspruch 1, wobei der mindestens eine Prozessor ferner darauf ausgelegt ist, das UE zu Folgendem zu veranlassen:
Empfangen einer zusätzlichen Angabe, die das Überspringen des Sendens des Feedback für ein zusätzliches Netzwerkcodierungspaket angibt.

9. Vorrichtung nach Anspruch 8, wobei:
i) die zusätzliche Angabe darauf basiert, dass sich das UE innerhalb eines Abstands eines Codiergeräts befindet; oder
ii) wobei der mindestens einen Prozessor ferner darauf ausgelegt ist, das UE zu Folgendem zu veranlassen:
Messen einer Referenzsignal-Empfangsleistung eines Signals von einem Codiergerät, die höher als ein Schwellenwert ist; und
Überspringen einer Übermittlung des Feedback für das zusätzliche Netzwerkcodierungspaket.

10. Ein Verfahren zur drahtlosen Kommunikation an einem Benutzergerät, UE, das Folgendes aufweist:
Empfangen einer Angabe, ein gestaffeltes Feedback für ein Netzwerkcodierungspaket zu verwenden, wobei das Netzwerkcodierungspaket eine codierte Kombination multipler Pakete zum Empfang durch multiple UEs einschließt, die das UE einschließen, und wobei das Feedback von dem UE für das Netzwerkcodierungspaket in einer anderen Zeitspanne als ein zusätzliches Feedback für das Netzwerkcodierungspaket von einem oder mehreren anderen UEs unter den multiplen UEs gestaffelt ist;
Empfangen des Netzwerkcodierungspakets;
Bestimmen einer einzigen Zeitspanne zum Senden des gestaffelten Feedback von dem UE für das Netzwerkcodierungspaket unter multiplen Feedback-Zeitspannen für das Netzwerkcodierungspaket; und
Übermitteln des Feedback von dem UE für das Netzwerkcodierungspaket in der einzigen Zeitspanne unter den multiplen Feedback-Zeitspannen für das Netzwerkcodierungspaket.

11. Eine Vorrichtung zur drahtlosen Kommunikation an einem Codiergerät, die Folgendes aufweist:
Speicher; und
mindestens einen Prozessor, der mit dem Speicher gekoppelt und darauf ausgelegt ist, das Codiergerät zu Folgendem zu veranlassen:
Übermitteln einer Angabe für mehrere Benutzergeräte, UEs, ein gestaffeltes Feedback für ein Netzwerkcodierungspaket über multiple, dem Netzwerkcodierungspaket zugeordnete Feedback-Zeitspannen zu nutzen, wobei das Netzwerkcodierungspaket eine codierte Kombination multipler Pakete zum Empfang durch die mehreren UEs einschließt;
Übermitteln des Netzwerkcodierungspakets; und
Empfangen eines Feedback von den mehreren UEs über die multiplen Feedback-Zeitspannen, wobei das Feedback für das Netzwerkcodierungspaket von unterschiedlichen UEs unter den mehreren UEs in unterschiedlichen Feedback-Zeitspannen unter den multiplen Feedback-Zeitspannen gestaffelt ist.

12. Vorrichtung nach Anspruch 11, die ferner eines unter Folgendem aufweist:
i) mindestens eine mit dem mindestens einen Prozessor gekoppelte Antenne, wobei die multiplen Feedback-Zeitspannen multiplen physischen Sidelink-Feedback-Kanal-Slots, PSFCH-Slots, entsprechen und die multiplen Feedback-Zeitspannen mindestens eine Zeitspanne einschließen, die multiple PSFCH-Slots nach dem Netzwerkcodierungspaket liegt;
ii) Kopfdaten des Netzwerkcodierungspakets die Angabe aufweisen;
iii) eine Konfiguration für die mehreren UEs die Angabe aufweist;
iv) der mindestens eine Prozessor ist zum Empfangen des Feedback von den mehreren UEs über die multiplen Feedback-Zeitspannen ferner darauf ausgelegt, das Codiergerät zu Folgendem zu veranlassen:
Empfangen des Feedback für jedes UE in einer Zeitspanne, die auf einer entsprechenden UE-Identifikation, UE-ID, und einer Paket-ID für das Netzwerkcodierungspaket basiert;
v) der mindestens eine Prozessor ist zum Empfangen des Feedback von den mehreren UEs über die multiplen Zeitspannen ferner auf Folgendes ausgelegt:
Empfangen des Feedback für jedes UE in einer Zeitspanne, die auf einem entsprechenden Abstand von dem Codiergerät basiert;
vi) der mindestens eine Prozessor ist zum Empfangen des Feedback von den mehreren UEs über die multiplen Feedback-Zeitspannen ferner auf Folgendes ausgelegt:
Empfangen des Feedback für jedes UE in einer Zeitspanne, die auf einer einem entsprechenden Feedback zugeordneten Paketpriorität basiert;
vii) wobei der mindestens eine Prozessor zum Empfangen des Feedback von den mehreren UEs über die multiplen Feedback-Zeitspannen ferner auf Folgendes ausgelegt ist:
Empfangen des Feedback für jedes UE in einer Zeitspanne, die auf einer einem entsprechenden Feedback zugeordneten Paketablaufzeit basiert;
viii) der mindestens eine Prozessor ist ferner darauf ausgelegt, das Codiergerät zu Folgendem zu veranlassen:
Angeben, das Senden des Feedback für das Netzwerkcodierungspaket zu überspringen, gegenüber einem oder mehreren UEs.

13. Vorrichtung nach Anspruch 12, Option i), die ferner eines unter Folgendem aufweist:
i) eine Anzahl der multiplen PSFCH-Slots basiert auf mindestens einem unter einer Anzahl an UEs oder einer Anzahl codierter Transportblöcke, TBs, in dem Netzwerkcodierungspaket;
ii) eine Anzahl der multiplen PSFCH-Slots basiert auf einem Verzögerungsbudget an Paketen, die das Netzwerkcodierungspaket aufweist;
iii) der mindestens eine Prozessor ist zum Übermitteln der Angabe ferner darauf ausgelegt, das Codiergerät zu Folgendem zu veranlassen:
Übermitteln der Angabe für die mehreren UEs, das gestaffelte Feedback über die multiplen PSFCH-Slots zu liefern, als Reaktion darauf, dass eine Menge an Feedback-Ressourcen für das Netzwerkcodierungspaket größer als ein Schwellenwert ist;
iv) der mindestens eine Prozessor ist ferner darauf ausgelegt, das Codiergerät zu Folgendem zu veranlassen:
Zuordnen einer unterschiedlichen Anzahl an physischen Sidelink-Feedback-Kanalressourcen für das Netzwerkcodierungspaket über die multiplen PSFCH-Slots;
v) der mindestens Prozessor ist ferner darauf ausgelegt, das Codiergerät zu Folgendem zu veranlassen:
Zuordnen einer gleichen Anzahl an physischen Sidelink-Feedback-Kanalressourcen für das Netzwerkcodierungspaket über die multiplen PSFCH-Slots.

14. Vorrichtung nach Anspruch 12, Option viii), wobei sich das eine oder die mehreren UEs innerhalb eines Abstands des Codiergeräts befinden oder eine Referenzsignal-Empfangsleistung eines Signals von dem Codiergerät messen, die höher als ein Schwellenwert ist.

15. Ein Verfahren zur drahtlosen Kommunikation an einem Codiergerät, das Folgendes aufweist:
Übermitteln einer Angabe für mehrere Benutzergeräte, UEs, ein gestaffeltes Feedback für ein Netzwerkcodierungspaket über multiple, dem Netzwerkcodierungspaket zugeordnete Zeitspannen zu nutzen, wobei das Netzwerkcodierungspaket eine codierte Kombination multipler Pakete zum Empfang durch die mehreren UEs einschließt;
Übermitteln des Netzwerkcodierungspakets; und
Empfangen eines Feedback von den mehreren UEs über die multiplen Feedback-Zeitspannen, wobei das Feedback für das Netzwerkcodierungspaket von unterschiedlichen UEs unter den mehreren UEs in unterschiedlichen Feedback-Zeitspannen unter den multiplen Feedback-Zeitspannen gestaffelt ist.

## Revendications

1. Appareil pour communication sans fil au niveau d'un équipement utilisateur, UE, comprenant :
une mémoire ; et
au moins un processeur couplé à la mémoire et configuré pour amener l'UE à :
recevoir une indication d'utiliser un retour échelonné pour un paquet de codage réseau, dans lequel le paquet de codage réseau comprend une combinaison codée de multiples paquets pour réception par de multiples UE incluant l'UE, et dans lequel le retour provenant de l'UE pour le paquet de codage réseau est échelonné dans une période de temps différente d'un retour supplémentaire pour le paquet de codage réseau provenant d'un ou plusieurs UE différents des multiples UE ;
recevoir le paquet de codage réseau ;
déterminer une période de temps unique pour envoyer le retour provenant de l'UE pour le paquet de codage réseau parmi de multiples périodes de temps de retour pour le paquet de codage réseau ; et
transmettre le retour provenant de l'UE pour le paquet de codage réseau dans la période de temps unique parmi les multiples périodes de temps de retour pour le paquet de codage réseau.

2. Appareil selon la revendication 1, comprenant en outre :
au moins une antenne couplée à l'au moins un processeur, dans lequel les multiples périodes de temps de retour pour le paquet de codage réseau correspondent à de multiples créneaux de canal physique de retour de liaison latérale, PSFCH, et dans lequel la période de temps unique pour que l'UE fournisse le retour provenant de l'UE pour le paquet de codage réseau est plus d'un créneau PSFCH après le paquet de codage réseau.

3. Appareil selon la revendication 2, dans lequel un nombre des multiples créneaux PSFCH est sur la base d'un nombre de blocs de transport, TB, codés dans le paquet de codage réseau.

4. Appareil selon la revendication 2, dans lequel un nombre des multiples créneaux PSFCH est sur la base d'un budget de retard de paquets compris dans le paquet de codage réseau.

5. Appareil selon la revendication 1, dans lequel l'indication est comprise dans un en-tête du paquet de codage réseau.

6. Appareil selon la revendication 1, dans lequel l'indication est comprise dans une configuration pour l'UE.

7. Appareil selon la revendication 1, dans lequel la période de temps unique est sur la base de l'un des éléments suivants :
i) un identifiant, ID, d'UE, et un ID de paquet pour le paquet de codage réseau ;
ii) une distance correspondante à partir d'un dispositif de codage ;
iii) une priorité de paquet associée au retour ; ou
iv) un temps d'expiration de paquet associé au retour.

8. Appareil selon la revendication 1, dans lequel l'au moins un processeur est en outre configuré pour amener l'UE à :
recevoir une indication supplémentaire indiquant de sauter l'envoi du retour pour un paquet de codage réseau supplémentaire.

9. Appareil selon la revendication 8, dans lequel :
i) l'indication supplémentaire est sur la base du fait que l'UE est situé à une certaine distance près d'un dispositif de codage ; ou
ii) dans lequel l'au moins un processeur est en outre configuré pour amener l'UE à :
mesurer une puissance reçue de signal de référence d'un signal provenant d'un dispositif de codage qui est supérieure à un seuil ; et
sauter une transmission du retour pour le paquet de codage réseau supplémentaire.

10. Procédé de communication sans fil au niveau d'un équipement utilisateur, UE, comprenant :
une réception d'une indication d'utiliser un retour échelonné pour un paquet de codage réseau, dans lequel le paquet de codage réseau comprend une combinaison codée de multiples paquets pour réception par de multiples UE incluant l'UE, et dans lequel le retour provenant de l'UE pour le paquet de codage réseau est échelonné dans une période de temps différente d'un retour supplémentaire pour le paquet de codage réseau provenant d'un ou plusieurs UE différents des multiples UE ;
une réception du paquet de codage réseau ;
une détermination d'une période de temps unique pour envoyer le retour échelonné provenant de l'UE pour le paquet de codage réseau parmi de multiples périodes de temps de retour pour le paquet de codage réseau ; et
une transmission du retour provenant de l'UE pour le paquet de codage réseau dans la période de temps unique parmi les multiples périodes de temps de retour pour le paquet de codage réseau.

11. Appareil pour communication sans fil au niveau d'un dispositif de codage, comprenant :
une mémoire ; et
au moins un processeur couplé à la mémoire et configuré pour amener le dispositif de codage à :
transmettre une indication pour une pluralité d'équipements utilisateur, UE, d'utiliser un retour échelonné pour un paquet de codage réseau à travers multiples périodes de temps de retour associées au paquet de codage réseau, dans lequel le paquet de codage réseau comprend une combinaison codée de multiples paquets pour réception par la pluralité d'UE ;
transmettre le paquet de codage réseau ; et
recevoir un retour provenant de la pluralité d'UE à travers les multiples périodes de temps de retour, dans lequel le retour pour le paquet de codage réseau provenant de différents UE de la pluralité d'UE est échelonné dans différentes périodes de temps de retour des multiples périodes de temps de retour.

12. Appareil selon la revendication 11, comprenant en outre l'un des éléments suivants :
i) au moins une antenne couplée à l'au moins un processeur, dans lequel les multiples périodes de temps de retour correspondent à de multiples créneaux de canal physique de retour de liaison latérale, PSFCH, et les multiples périodes de temps de retour comprennent au moins une période de temps qui est de multiples créneaux PSFCH après le paquet de codage réseau ;
ii) dans lequel l'indication est comprise dans un en-tête du paquet de codage réseau ;
iii) dans lequel l'indication est comprise dans une configuration pour la pluralité d'UE ;
iv) dans lequel pour recevoir le retour provenant de la pluralité d'UE à travers les multiples périodes de temps de retour, l'au moins un processeur est en outre configuré pour amener le dispositif de codage à :
recevoir le retour pour chaque UE dans une période de temps sur la base d'un identifiant, ID, d'UE correspondant, et d'un ID de paquet pour le paquet de codage réseau ;
v) dans lequel pour recevoir le retour provenant de la pluralité d'UE à travers les multiples périodes de temps, l'au moins un processeur est en outre configuré pour
une réception du retour pour chaque UE dans une période de temps sur la base d'une distance correspondante à partir du dispositif de codage ;
vi) dans lequel pour recevoir le retour provenant de la pluralité d'UE à travers les multiples périodes de temps de retour, l'au moins un processeur est en outre configuré pour :
une réception du retour pour chaque UE dans une période de temps sur la base d'une priorité de paquet associée à un retour correspondant ;
vii) dans lequel pour recevoir le retour provenant de la pluralité d'UE à travers les multiples périodes de temps de retour, l'au moins un processeur est en outre configuré pour :
une réception du retour pour chaque UE dans une période de temps sur la base d'un temps d'expiration de paquet associé à un retour correspondant ;
viii) l'au moins un processeur est en outre configuré pour amener le dispositif de codage à :
indiquer à un ou plusieurs UE de sauter l'envoi du retour pour le paquet de codage réseau.

13. Appareil selon la revendication 12, option i), comprenant en outre l'un des éléments suivants :
i) dans lequel un nombre des multiples créneaux PSFCH est sur la base d'au moins l'un d'un nombre d'UE ou d'un nombre de blocs de transport, TB, codés dans le paquet de codage réseau ;
ii) dans lequel un nombre des multiples créneaux PSFCH est sur la base d'un budget de retard de paquets compris dans le paquet de codage réseau ;
iii) dans lequel pour transmettre l'indication, l'au moins un processeur est en outre configuré pour amener le dispositif de codage à :
transmettre l'indication pour que la pluralité d'UE fournisse le retour échelonné à travers les multiples créneaux PSFCH en réponse au fait qu'une quantité de ressources de retour pour le paquet de codage réseau est supérieure à un seuil ;
iv) dans lequel l'au moins un processeur est en outre configuré pour amener le dispositif de codage à :
attribuer un nombre différent de ressources de canal physique de retour de liaison latérale pour le paquet de codage réseau à travers les multiples créneaux PSFCH ;
v) dans lequel l'au moins un processeur est en outre configuré pour amener le dispositif de codage à :
attribuer un même nombre de ressources de canal physique de retour de liaison latérale pour le paquet de codage réseau à travers les multiples créneaux PSFCH.

14. Appareil selon la revendication 12, option viii), dans lequel les un ou plusieurs UE sont situés à une certaine distance près du dispositif de codage ou mesurent une puissance reçue de signal de référence d'un signal provenant du dispositif de codage qui est supérieure à un seuil.

15. Procédé de communication sans fil au niveau d'un dispositif de codage, comprenant :
une transmission d'une indication pour qu'une pluralité d'équipements utilisateur, UE, utilise un retour échelonné pour un paquet de codage réseau à travers de multiples périodes de temps associées au paquet de codage réseau, dans lequel le paquet de codage réseau comprend une combinaison codée de multiples paquets pour réception par la pluralité d'UE ;
une transmission du paquet de codage réseau ; et
une réception du retour provenant de la pluralité d'UE à travers les multiples périodes de temps de retour, dans lequel le retour pour le paquet de codage réseau provenant de différents UE de la pluralité d'UE est échelonné dans différentes périodes de temps de retour des multiples périodes de temps de retour.
